# EUROPEAN PATENT SPECIFICATION

(11) **EP 0 706 683 B1**
(45) Date of publication and mention of the grant of the patent: **13.09.2000**
(21) Application number: 94918986.4
(22) Date of filing: 01.07.1994
(51) Int. Cl.: G06F 9/44, H04M 3/50

(54) **Apparatus and method for developping software**
Anordnung und Verfahren zum Erstellen von Software
Appareil et procédé de développement de logiciel

(30) Priority: 01.07.1993 GB 9313621; 21.04.1994 GB 9407973
(43) Date of publication of application: 17.04.1996
(73) Proprietor: BRITISH TELECOMMUNICATIONS public limited company, London EC1A 7AJ (GB)
(72) Inventor: HANES, Roger, Brian, Woodbridge Suffolk IP12 4RT (GB); SALTER, Josephine, Ann, Susan, Suffolk IP4 2RE (GB); POPAY, Paul, Ian, Ipswich Suffolk IP4 4AG (GB)
(74) Representative: Roberts, Simon Christopher
(86) International application number: GB9401429
(87) International publication number: WO9501597

(56) References cited:
- TENCON '89: INFORMATION TECHNOLOGIES FOR THE 90S, SESSION 2, PAPER 1, BOMBAY, IN pages 26 - 29, XP000203825 HONG
- SDL '87: STATE OF THE ART AND FUTURE TRENDS, 1987, NORTH-HOLLAND, NL pages 117 - 124 HONG ET AL. 'SDL-oriented graphical environment'
- PROCEEDINGS OF THE SOUTHEASTCON 91, vol.1, April 1991, WILLIAMSBURG, US pages 158 - 162, XP000286848 DAS ET AL.
- INTERNATIONAL SWITCHING SYMPOSIUM 1987, SESSION B4, PAPER 3, PHOENIX, US pages 303 - 307 SHIRASU ET AL.

## Description

### FIELD OF THE INVENTION

The present invention relates to generating sequences of instructions for an applications platform, for example, for a speech applications platform.

### BACKGROUND OF THE INVENTION

Speech applications platforms are used in telephone exchanges to provide automated customer services such as call waiting, call transfer, telephone answering and message recording, and so on. The computer hardware used in a modern telephone exchange may be sophisticated, and capable of supporting a far wider range of customer services than are actually implemented. The reason for this discrepancy is that generating the software for a customer service is a lengthy process. Furthermore, a new customer service must go through rigorous simulated operation before being put on line, in order to ensure that customers will react favourably to the service and wish to use it more rather than less frequently.

Historically, speech applications were created manually. Initially, a service designer would define a service on paper using a flow chart and other diagrammatic tools. Once designed in this form, a service would be written out as a "script", similar to the script for a theatrical play but defining an interactive dialogue between the applications platform and a calling customer. The script may contain branches for customer options and platform decisions. Thus the script, written in a recognised scripting language, defines all possible operations for the service. The script is then given to an experienced programmer, who writes a program for implementing the service. The program may be written in a high level language such as C or C + + to minimise the number of modifications required to enable it to run on a variety of different types of speech applications platforms.

A difficulty with this approach is that modification of the service definition at the flow chart level will require modification of the corresponding script and the corresponding C/C++ program. Thus minor modifications to the service definition require a disproportionate amount of effort to create a modified customer service.

A further problem is that mistakes are easily made in translating the service definition into a script, and particularly in translating the script into a program, to the extent that a significant amount of time is usually dedicated to debugging the program. With much computer software, it is accepted that minor errors will remain in the finished product, which may only be noticeable after the software has been in use for some time. However, a speech applications platform does not have the same degree of tolerance, for two reasons. Firstly, customers will be quickly put off by any mistakes which may occur during the operation of a service - loss of a message left on an answering service could mean the loss of a lucrative contract. Secondly, a software coding error could, on some of the computers used as speech applications platforms, interfere with other operations of the platform. At worst this could result in a complete crash of the telephone exchange.

A solution to these problems is to automate the process of translating the service definition into a computer program. Such a system is called a service creation tool. In a known service creation tool, a service is defined as a flow chart on a computer using a graphical user interface. Using the graphical user interface, individual function blocks are positioned and connected together to form an overall definition of the service. Each block may be selected for parameter adjustment which may affect the way that a particular block operates, and how that block is connected to the other blocks within the flow chart. Hong, J. P. et al. "SDL-oriented graphical environment" SDL '87, State of the art and future trends, North Holland, NL, pages 117-124 describes such a system. In this known system a syntax checker checks both the layout of the diagram and the syntax of the text written within the blocks. Hence the user must perform the time consuming task of entering parameters specifying block functions before the validity of the high level design is verified.

### SUMMARY OF THE INVENTION

According to a first aspect of the present invention, there is provided an an apparatus for generating a sequence of instructions for execution by an applications platform, comprising
input means for receiving user input
   graphical display means; and
processing means which is
   a) responsive to user input of first data specifying desired ones of a plurality of discrete functions capable of being performed by the applications platform, to display, via said graphical display means, a graphical representation of functional blocks corresponding to the specified functions;
   b) responsive to user input of second data specifying desired linkages between the specified functions, which linkages together define a logical sequence of performance of said functions, to display, via said graphical display means, a graphical representation of connections between the blocks corresponding to the specified linkages;
   c) operable to test the validity of the logical sequence defined by said linkages, to recognise errors in said logical sequence; and characterised in that the processing means is further operable only in the event of no such errors being recognised, to receive user input of third data specifying, for one or more of the specified functions, parameters particularising the function which is to be performed and to generate a sequence of instructions for execution of the specified functions in the defined sequence in response to the parameters thereby specified.

Additionally the processing means may by arranged to generate a text file for each of said blocks; generate a script file from said text files; and generate the sequence of instructions from said script file.

Corresponding methods are also provided.

### BRIEF DESCRIPTION OF THE DRAWINGS

Figure 1 shows a telecommunications network, having exchanges connected to customer equipment, said exchanges including speech applications platforms;
Figure 2 details a speech applications platform, of the type shown in Figure 1, including memory devices for storing instructions for controlling on-line operation of the platform;
Figure 3 shows a system for generation instructions for use on the platform shown in Figure 2, including a processing unit, memory devices and a speech card for generating and recognizing speech signals;
Figure 4 details the speech card shown in Figure 3;
Figure 5A shows an overview of the operations performed on the system shown in Figure 3 during service definition, including defining a service structure within a graphical user interface, validating said structure, entering parameters for a block and updating parameters for a block within a block text file;
Figure 5B shows and overview of the operations performed on the system shown in Figure 3 during service simulation and down-loadable code generation;
Figure 6 details a hardware initialization procedure performed automatically by software before the service definition procedures shown in Figure 5A begins;
Figure 7 details the procedure identified in Figure 5A for defining a service structure within a graphical user interface;
Figure 8 details the flow chart validation procedure identified in Figure 5A;
Figure 9 details the graphical user interface identified as a means for defining a service structure in Figure 7;
Figure 10 details the procedure identified in Figure 5A for updating parameters within a block text file;
   The following drawings give details of block proforma used for defining a service structure, and corresponding script definitions which define how parameters entered in the procedure identified in Figure 5A are mapped into a corresponding text file;
Figure 11A details an answer block proforma including an "OK" button;
Figure 11B details the specification of the script used when generating a text file from parameters entered into the answer block proforma identified in Figure 11A;
Figures 12A and 12B detail a hangup block proforma and its corresponding script definition;
Figures 13A and 13B detail a dial-out block proforma and its corresponding script definition;
Figures 14A and 14B detail a transfer block proforma and its corresponding script definition;
Figures 15A and 15B detail an info block proforma and its corresponding script definition;
Figures 16A and 16B detail a DTMF block proforma and its corresponding script definition;
Figures 17A, 17B and 17C detail a Query block proforma and its corresponding script definition;
Figures 18A and 18B detail a yes/no block proforma and its corresponding script definition;
Figures 19A and 19B detail a record block proforma and its corresponding script definition;
Figures 20A and 20B detail a play block proforma and its corresponding script definition;
Figures 21A and 21B detail an external block proforma and its corresponding script definition;
Figures 22A and 22B detail a stub block proforma and its corresponding script definition;
Figures 23A and 23B detail a switch block proforma and its corresponding script definition;
Figures 24A and 24B detail a test block proforma and its corresponding script definition;
Figures 25 to 38 provide a specific worked example of a service implemented using the tools that have been shown in the previous drawings;

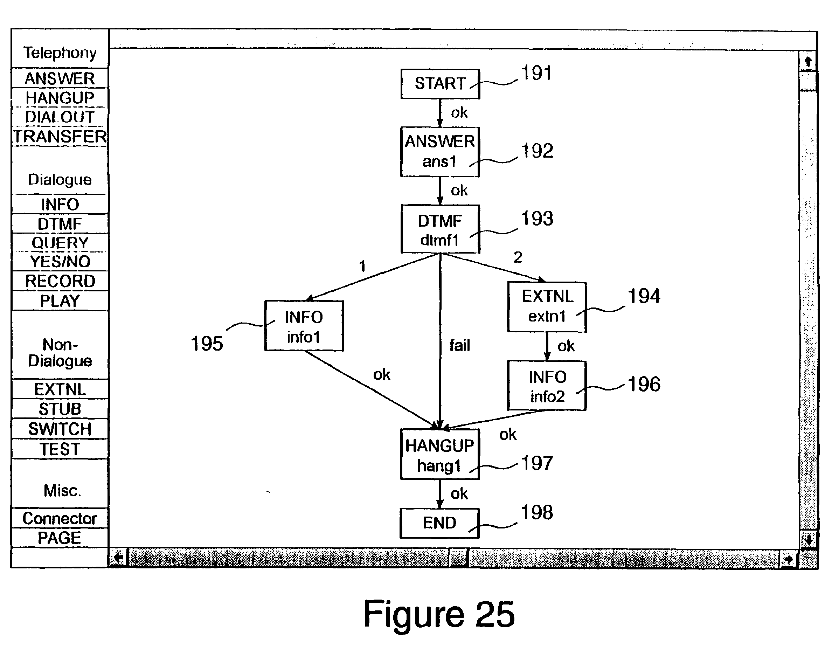

   Figure 25 details a graphical user interface, including an answer block, a DTMF block, a first info block, a second info block and a hangup block;

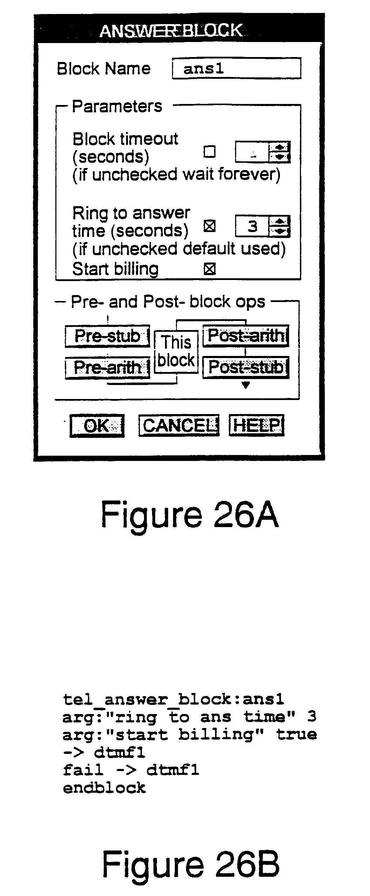

Figures 26A and 26B detail the answer block shown in Figure 25 and the resulting text file;

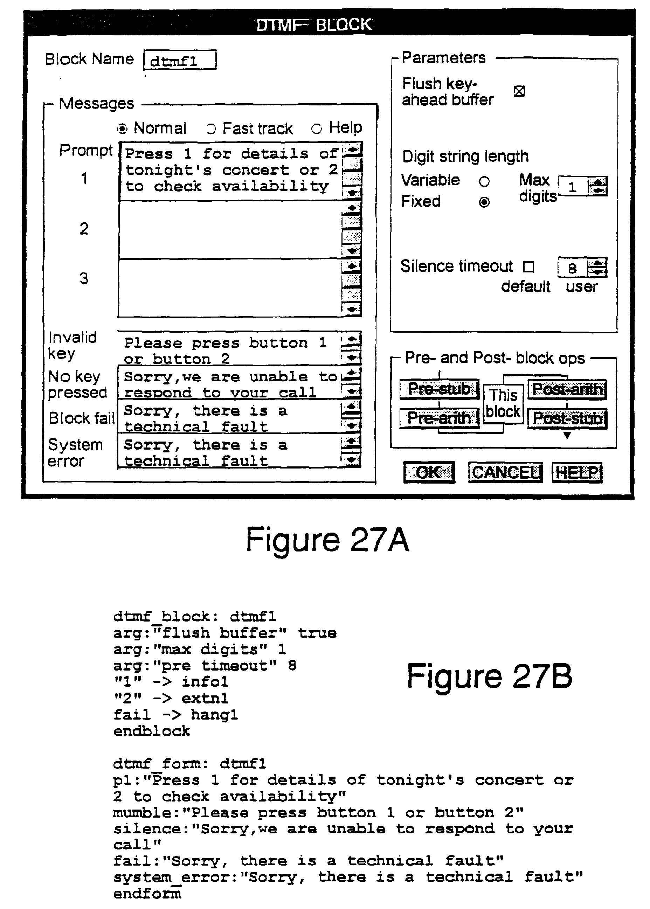

Figures 27A and 27B detail the DTMF block shown in Figure 25 and the resulting text file;

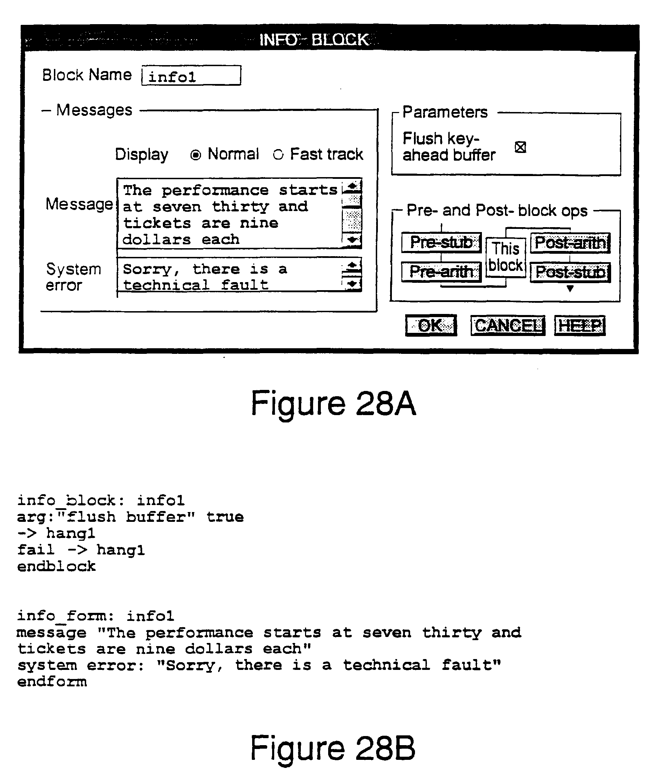

Figures 28A and 28B detail the first info block shown in Figure 25 and the resulting text file;

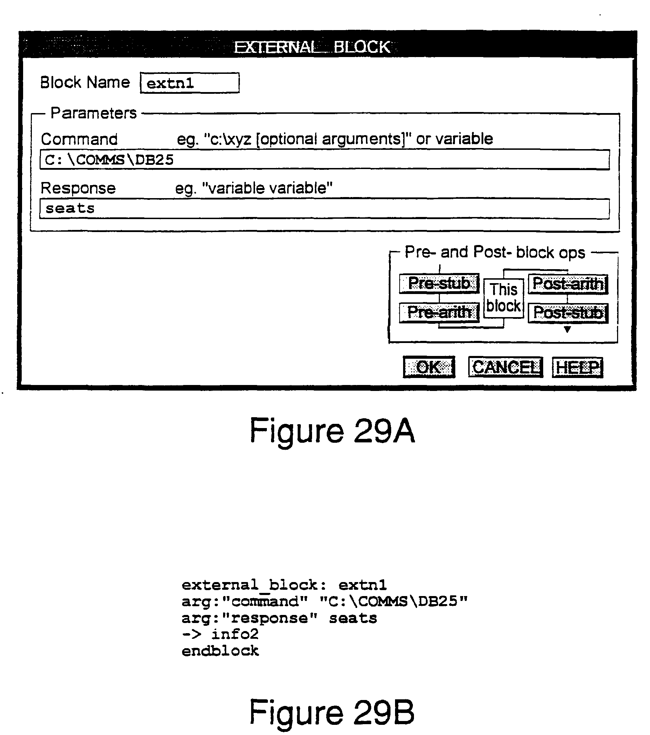

Figures 29A and 29B detail the external block shown in Figure 25 and the resulting text file;

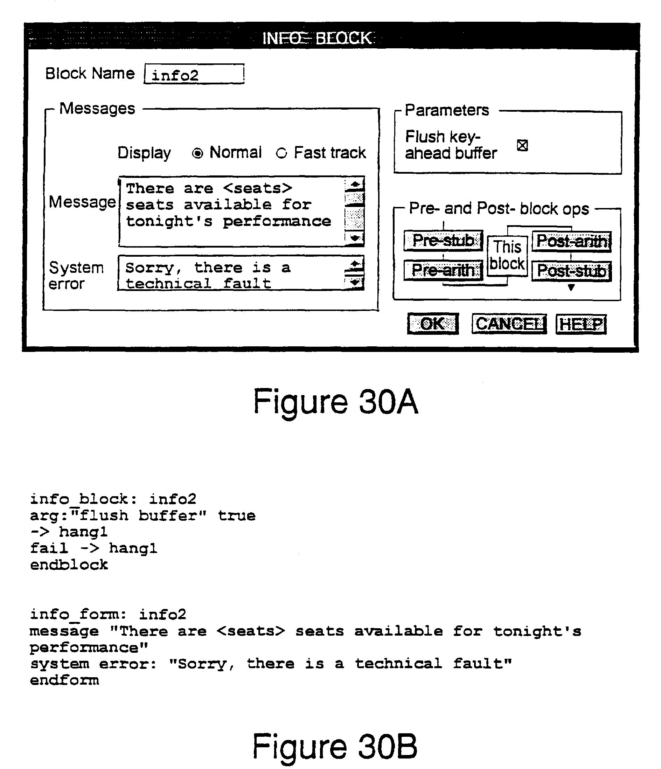

Figures 30A and 30B detail the second info block shown in Figure 25 and the resulting text file;

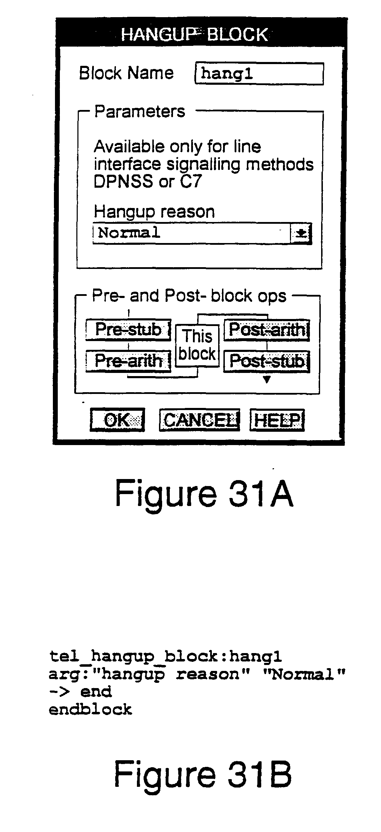

Figures 31A and 31B detail the hangup block shown in Figure 25 and the resulting text file;

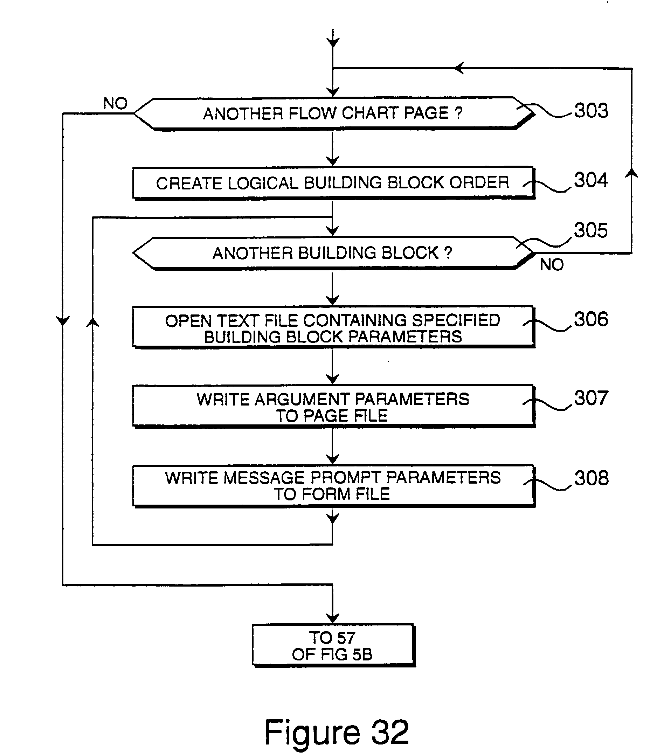

Figure 32 shows the procedure for generating a page file and a form file using the text files shown in Figures 26 to 31;

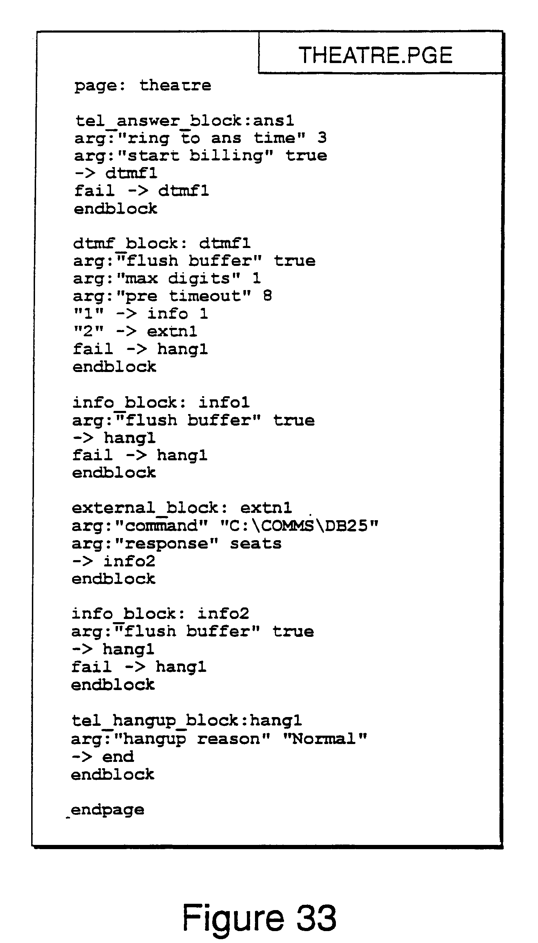

Figure 33 shows the page file generated according to the procedure shown in Figure 32;

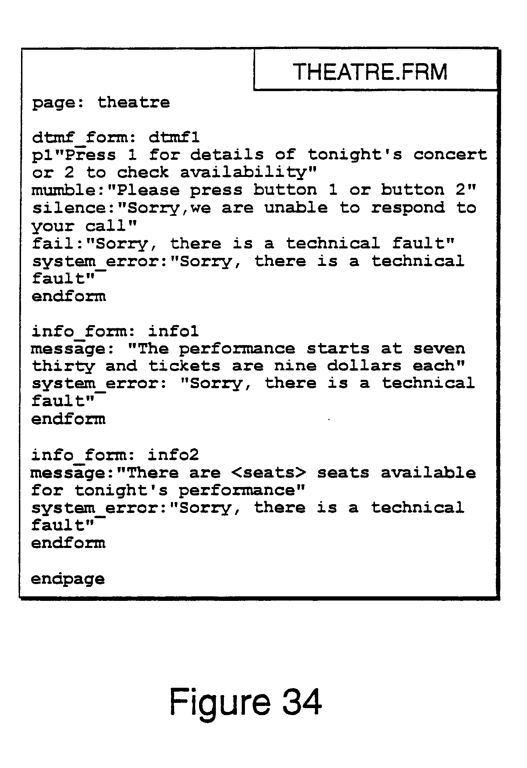

Figure 34 shows the form file generated according to the procedure shown in Figure 32;

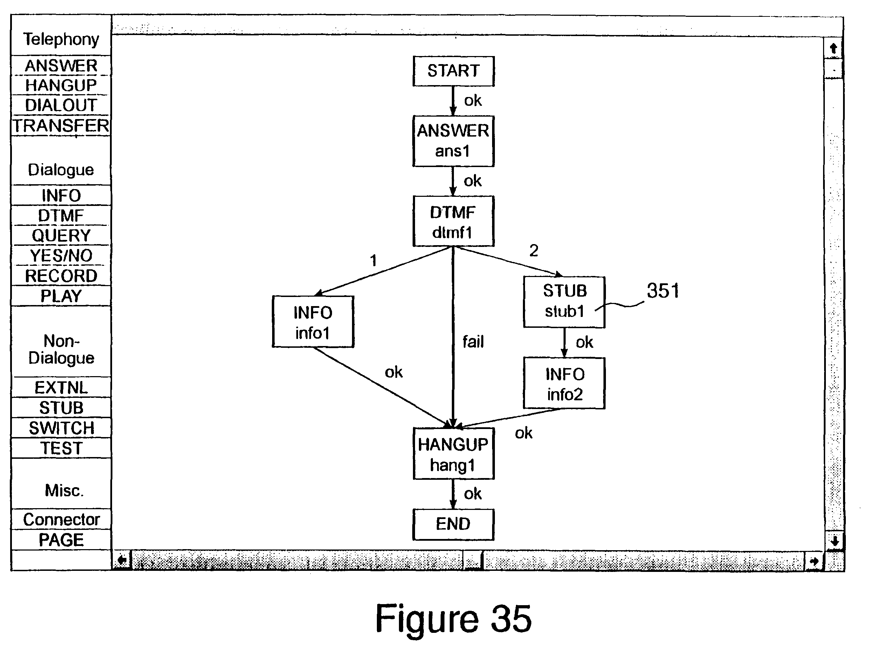

Figure 35 shows an alternative structure for implementing the service shown in Figure 25, including a stub block;

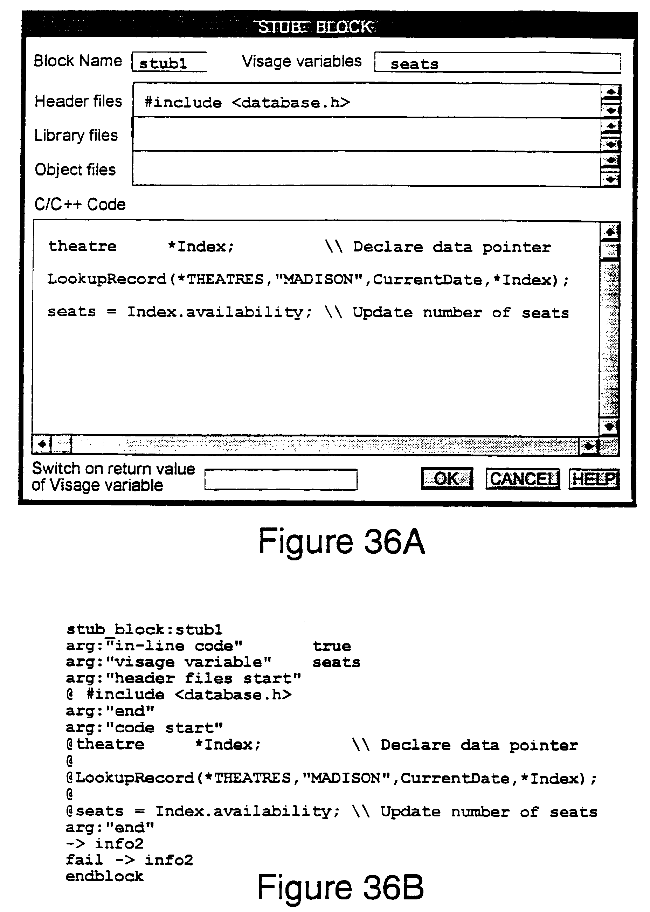

Figures 36A and 36B detail the stub block shown in Figure 35 and the resulting text file;

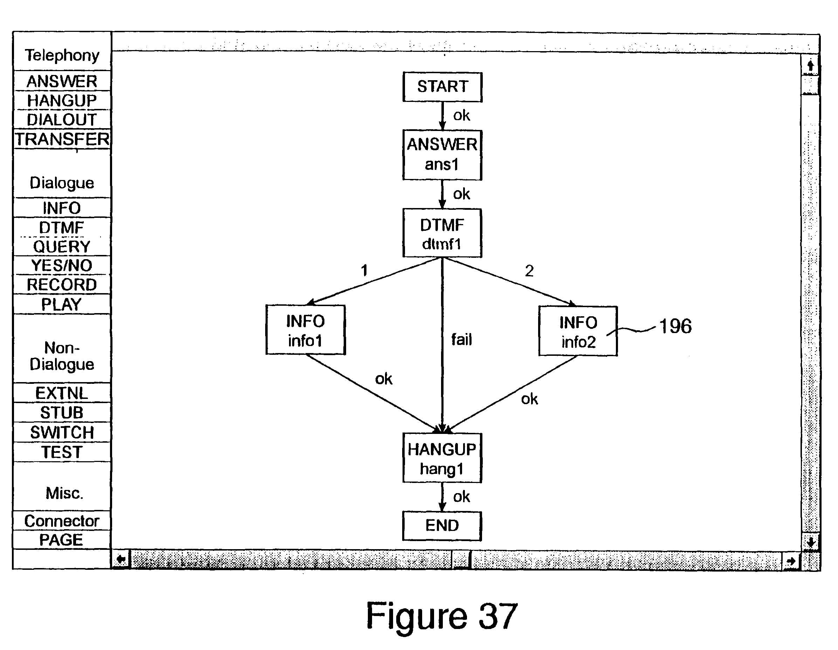

Figure 37 shows a further alternative structure for implementing the service shown in Figure 25, including a modified info block;

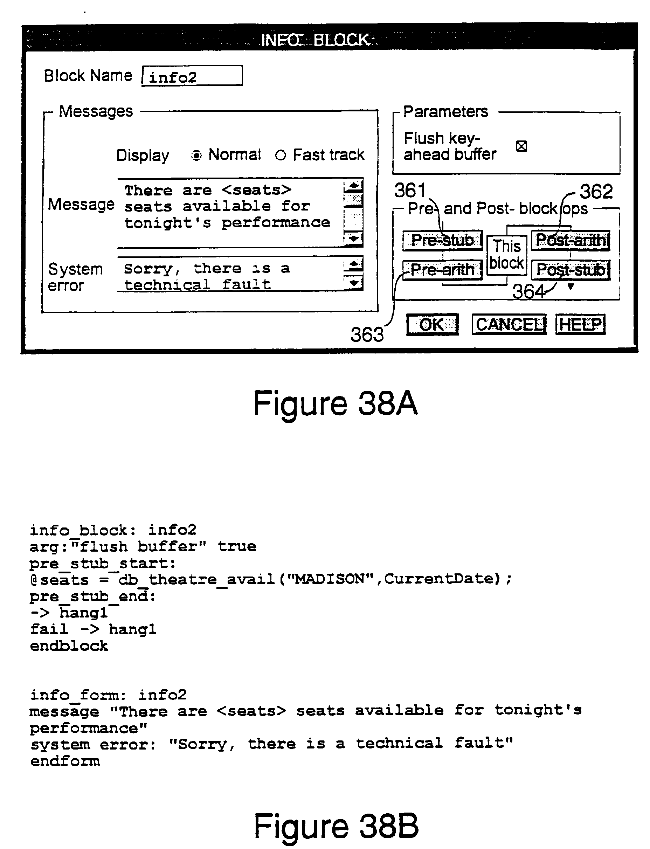

Figures 38A and 38B detail the proforma for the modified stub block shown in Figure 37 and the resulting text file;

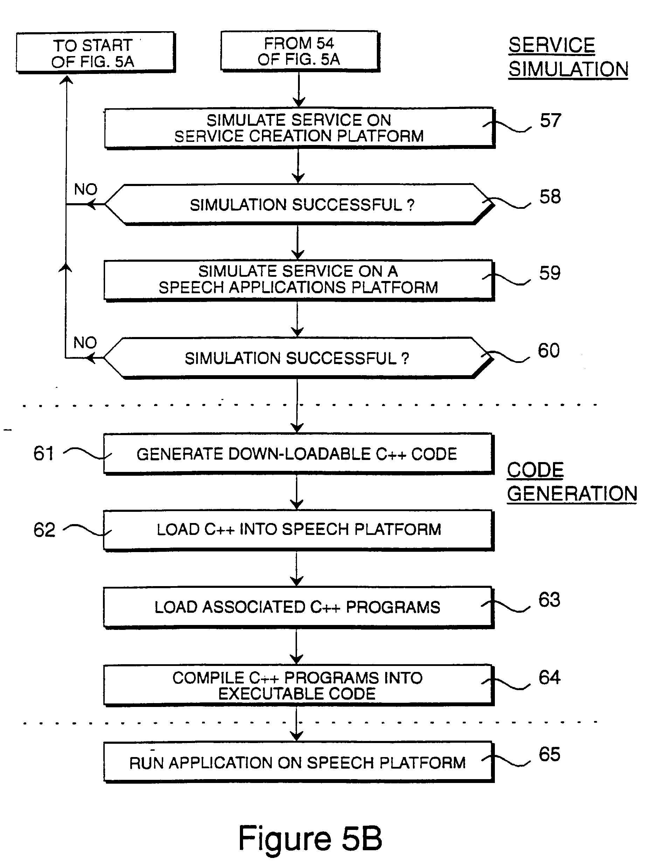

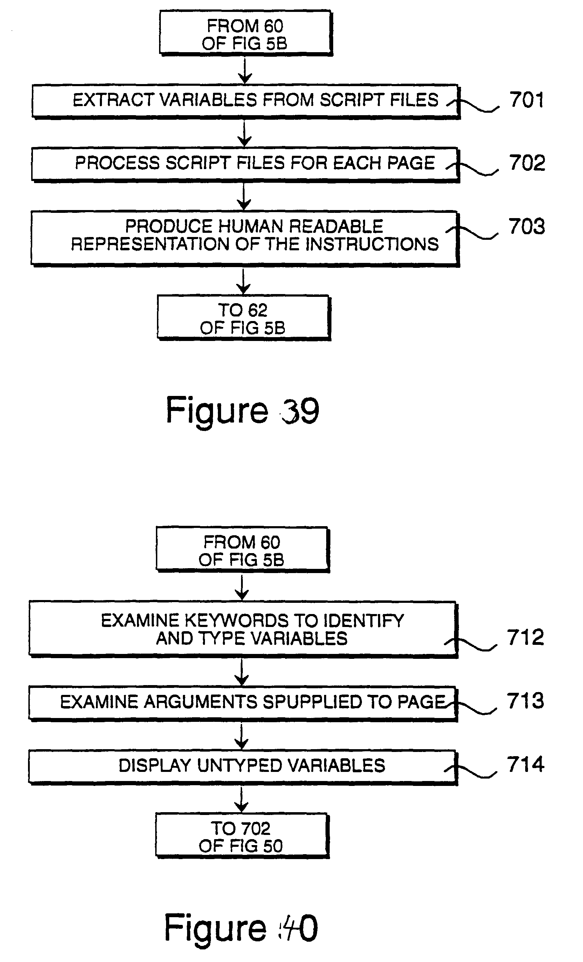

Figure 39 details procedures identified in Figure 5B, for the creation of downloadable service instructions, including the extraction of variables and the processing of script files;

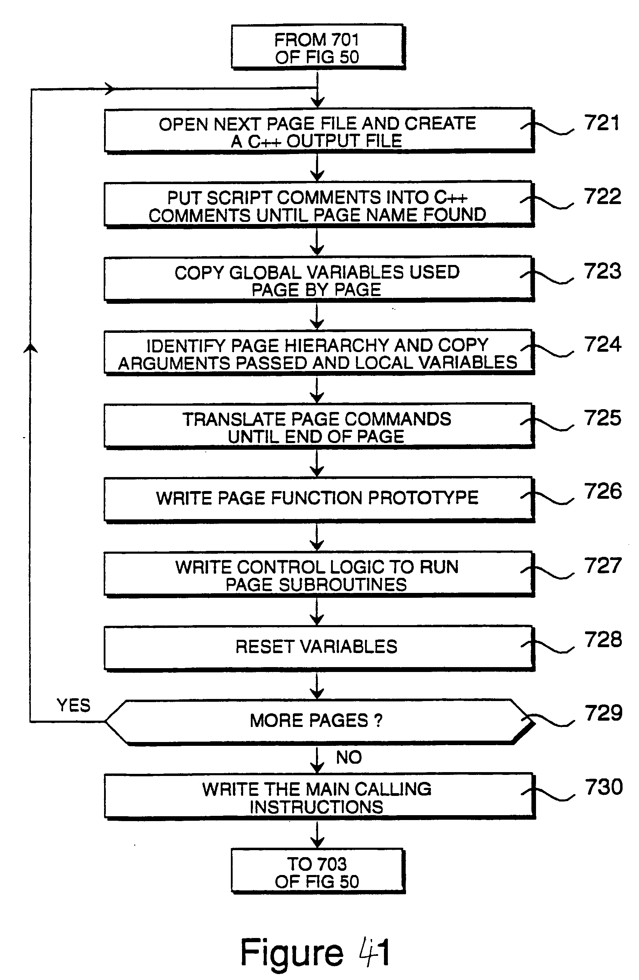

Figure 40 details the extraction of variables, identified in Figure 39; and
Figure 41 details the processing of script files, identified in Figure 39.

### DETAILED DESCRIPTION OF A PREFERRED EMBODIMENT

The preferred embodiment relates to the generation of instructions, which are down-loadable onto a speech applications platform of the type used in a telephone exchange or a private branch exchange. However, the techniques described are applicable to other situations, in which a plurality of parameter driven operations are linked to define a logically controlled application.

### THE APPLICATION ENVIRONMENT

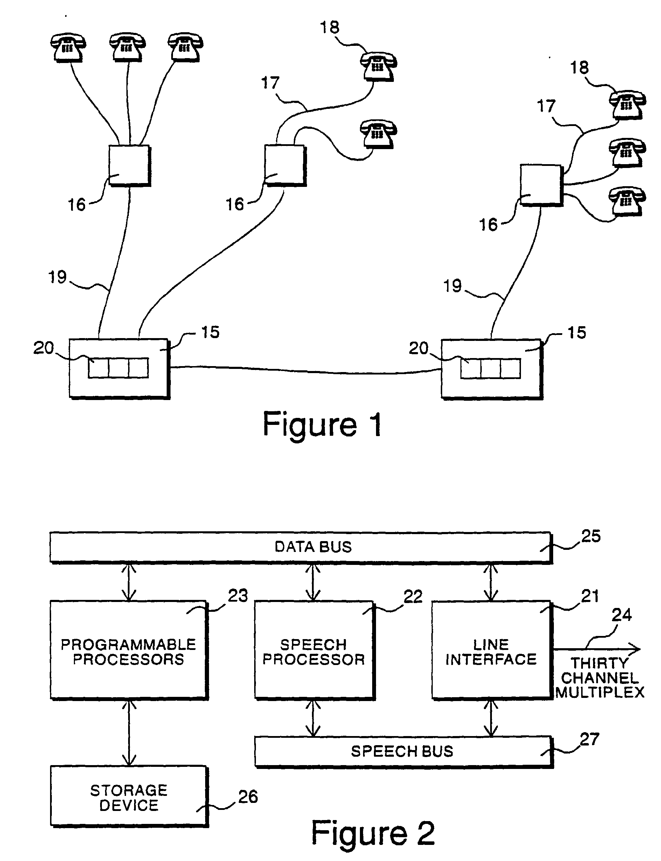

A telecommunications network is shown in Figure 1, having a plurality of trunk exchanges 15, each connected to a plurality of local exchanges 16. Each local exchange is connected to a plurality of local lines 17, which are in turn connected to a customer's terminal equipment 18, such as a conventional speech telephone.

Each local exchange 16 receives and transmits analog signals from and to customer terminals 18. At the local exchanges, analog signals are coded for digital transmission to the trunk exchanges 15 and digital signals received from the trunk lines are decoded for analog transmission in the local network. Digital signals are transmitted between exchanges over trunk lines 19, in the form of a two mega bit per second time divided multiplex of thirty digitized speech channels plus two digitized signalling channels.

A trunk exchange 15 includes speech applications platforms 20, arranged to communicate with the exchange over a two mega bit multiplex. Thus the hardware provided for each speech applications platform is capable of handling thirty telephone channels.

A speech applications platform is shown in Figure 2, having a line interface circuit 21, a speech processor 22 and programmable processing devices 23. A thirty-two channel multiplex (thirty speech channels plus two channels of signalling) is supplied to the line interface circuit 21 over a digital transmission line 24. The line interface circuit responds to signalling commands and identifies each of the speech channels for subsequent processing.

A speech application is usually initiated by an incoming call. In particular, information contained on a signalling channel will identify the presence of an incoming call to the line interface circuit 21. In turn, the line interface circuit will communicate with processors 23 over a data bus 25, initially identifying that a particular channel wishes to make use of a speech service and then identifying the particular service required.

The speech applications platform is capable of executing many different operations, in response to requests made by customers. These services are executed in response to instructions stored on a storage device 26, such as a hard disc drive and the particular instructions for a requested service are loaded to the programmable processors only when their particular service has been requested.

Requests from a customer may be transmitted in the form of tones or in the form of loop disconnections, resulting in data being transmitted over the data bus 25 to the programmable processors 23. After instructions for a particular speech application have been loaded to the programmable processor 23 from the storage device 26, the programmable processors 23 will, as required, issue instructions to the line interface circuit 21 and to the speech processor 22, over the data bus 22. Thus, compressed speech recordings may be transmitted to the speech processor 22, which is arranged to decompress the speech and supply the decompressed speech to the line interface circuit, via a speech bus 27, which in turn relays the speech to the communications channel 24, whereafter it is processed in substantially the same way as any other speech signal.

Speech received by the line interface circuit 21 is also transmitted to the speech processor over the speech bus 27. When it is necessary for the speech processor to recognize speech patterns, speech templates (or, more usually, hidden Markov models) are down-loaded from the storage device 26 and supplied to the speech processor 22 via the data bus 25, under the control of the programmable processors 23.

Usually, the development of services available for the platform is an ongoing process, requiring new instructions to be created for the platform and loaded to the storage device 26. Conventionally, a significant amount of time and skill is required to develop new instructions for a speech applications platform.

The speech applications platform operates under the control of an operating system, such as that supplied under the trade mark UNIX. An applications program created in a high level language, such as C or C++ may be compiled to generate instructions compatible with the UNIX operating system and the hardware that comprises the speech applications platform. These instructions are then stored on the storage device 26, which may be a hard disc drive, for use on demand when a caller requests a particular service.

Any errors present in the instructions may result in the platform performing in a way which would be inappropriate for customers, leading to customer dissatisfaction. The inclusion of a speech applications platform in an exchange adds to the cost of that exchange and this cost is justified only if sufficient use is made of the platform, once it has been installed. Thus, customer satisfaction is an important requirement. Furthermore, errors may result in the platform being forced out of service which, in extreme situations, may result in the whole exchange becoming inoperable.

Errors are usually introduced at the stage of writing a program for a service in a high level language, which will then be down-loaded onto an applications platform and compiled into instructions for the platform. Writing a program for a customer service is a time consuming process, especially if the resulting program is to be free from errors. Thus a dilemma exists in that it is desirable to create or modify customer services as quickly as possible, in order to take full advantage of market conditions, while at the same time ensuring that no errors are present.

It is also possible that a particular application, which works perfectly well in one geographical location, may require modification so as to work in an acceptable fashion in another location; particularly when speech recognition is used, which may have to take into account the use of local language, idioms and dialects. Thus, it is possible to construct service instructions which appear to be completely acceptable, with no errors present, but which require modification to work in a particular environment. For example, an application may be designed to recognise the words "yes" and "no" but in many regions, using the English language say, different words may be used to convey the same meaning.

The present embodiment is directed towards an improved system for generating service instructions for a speech applications platform. Furthermore, the present embodiment provides a system for testing such instructions before they are down-loaded onto the actual operational platform.

### SYSTEM OVERVIEW

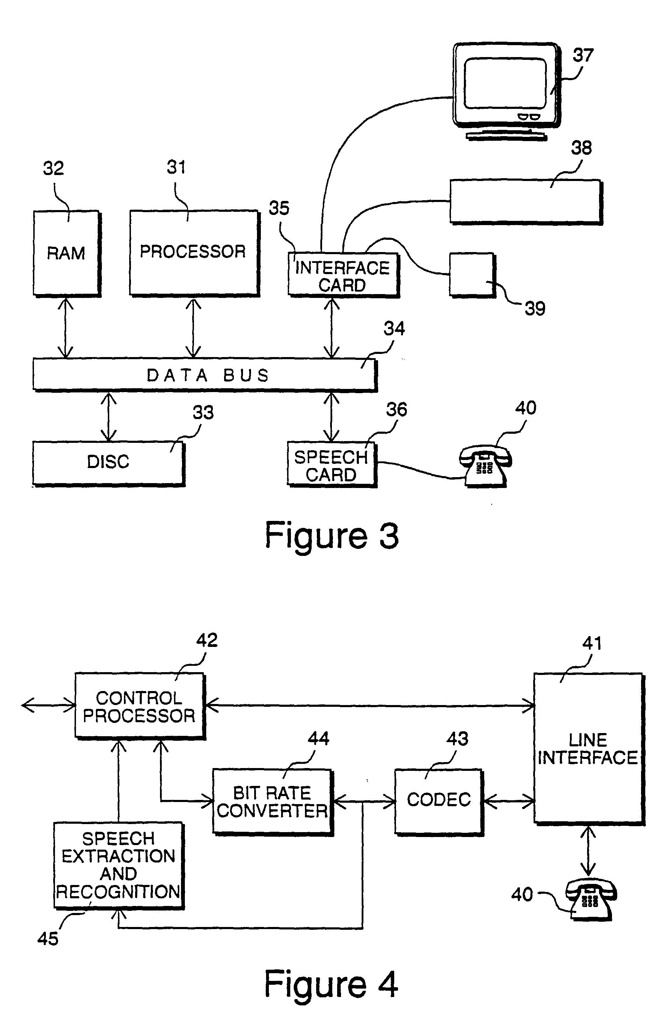

A system for generating and testing instructions for defining services performed by a speech applications platform is referred to as a development platform. A development platform is shown in Figure 3, based around the architecture commonly used in personal computers, and includes a processing device 31, such as a 80386 microprocessor, supplied by the Intel corporation, having access to, typically, four mega bytes of random access memory (RAM) 32 and forty mega bytes of permanent storage, in the form of a hard disc drive 33. The hardware may be constructed using PC motherboards with additional cards added thereto.

A data bus 34, allowing the transfer of data between the processor 34 and the memory 32, is also connected to an interface card 35 and to a speech card 36. The interface card 35 is in turn connected to a monitor 37, a keyboard 38 and a mouse 39, to allow communication with an operator. The speech card 36 is in turn connected to a telephone 40, thereby allowing an operator to communicate with the system by speech and by telephone signalling.

The speech card 36 is detailed in Figure 4 and includes a telephone line interface circuit 41, a control processor 42, a codec 43, a bit rate converter 44 and a speech extraction and recognition circuit 45. Speech received by a telephone 40 is supplied to the telephone line interface 41 and then converted into digital form, at sixty four kilo-bits per second, by the codec 43. The output from the codec 43 is supplied to the speech recognition circuit 45 which, in response to template data supplied from the main processor 31, is arranged to identify particular words and phrases. Data representing the occurrence of a particular item of speech, detected by the recognition circuit 45, is supplied to the control processor 42.

Speech from the codec 43 is also supplied to the bit rate converter 44, which compresses the speech signal, thereby allowing it to be stored efficiently on the disc drive 33. Similarly, speech messages are stored on the hard disc 33 in compressed form and decompressed by the converter 44, for transmission to the telephone 40, via the codec 43 and interface 41. Signalling from the telephone 40 is interpreted as such by the interface 41 and data defining said signalling is supplied directly to the control processor 42.

Software running on the applications development platform includes an operating system, such as MS-DOS supplied by Microsoft Corporation, a graphical operating system, such as WINDOWS also supplied by Microsoft, and a service creation tool which may be written in a high level language such as Visual Basic; although this fact is not of importance to the service designer using it.

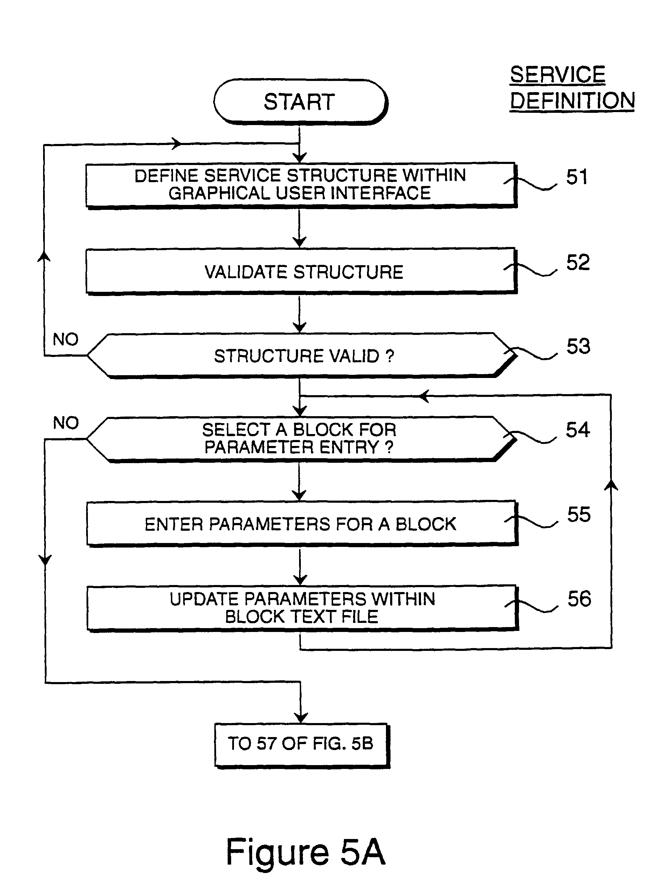

The procedure for designing a service for a speech applications platform of the type shown in Figure 2 is shown in Figures 5A and 5B.

At step 51, a service structure is defined by connecting functional blocks together in a flow chart. A graphical user interface is used to perform the operations of selecting, positioning and connecting the blocks. At step 52 the structure defined at step 51 is validated, that is to say, the topology of connections between blocks is analyzed, to determine whether the structure is valid.

If the structure is not valid, control is returned at step 53 to step 51. Thus the service structure may be redefined and revalidated until a valid structure is produced, whereupon control is directed to step 54. At step 54 a question is asked as to whether any of the control blocks is available for parameter entry and, if so, a selection of such a block is made. Block parameters allow definition of data required for operation of a block, for example the text of a message that will be replayed to a caller when a call to the service is received.

At step 55 parameters for the selected block are entered and at step 56 parameter values in an associated text file for the block are updated. These block parameters are written according to the rules of a script language, and thus the text files may be understood by a human operator. Block parameters may be optional or compulsory, and the system will not proceed to the next stage until all compulsory parameters in all the blocks used in the service have been entered. Parameter entry is repeated until step 54 determines that a block is not selected for parameter entry, whereupon control is diverted to step 57 of Figure 5B.

Once block parameters have been entered, the service has been defined. Step 57 of Figure 5B marks the beginning of the next stage of service creation, which is service simulation. At step 57 service simulation is performed on the service creation platform, which is the same hardware upon which steps 51 to 56 were executed.

At step 58 a question is asked as to whether the service simulation performed at step 57 was successful and if answered in the negative, control is returned to step 51, such that the service definition steps 51 to 56 may be re-implemented so as define a successful service.

When the service simulation performed at step 57 is successful, resulting in a question asked at step 58 being answered in the affirmative, the text files, containing a script for each of the individual blocks, is loaded onto a speech applications platform, allowing service simulation to be effected by said platform at step 59. Again, a question is asked at step 60 as to whether the simulation performed at step 59, on the speech applications platform, was successful and if answered in the negative, control is again returned to step 51, allowing the service to be re-defined on the service creation platform.

Thus there are two stages of simulation - the first is performed on the development system on which the service is being created, and a second is performed on a separate platform, which may be a speech applications platform such as that for which the service is designed. Once both stages of simulation have been successfully completed, step 60 diverts control to the next stage of service creation, which is Code Generation.

At step 61 the script files defining the service are translated into down-loadable C++ code on the service creation platform. C++ is a highly transportable language, and thus the code generated at step 61 is suitable for being down-loaded onto a variety of speech applications platforms, possibly having different configurations of hardware, software and operating systems.

At step 62 down-loadable C++ code generated at step 61 is loaded into a speech applications platform and at step 63, if required, associated C++ programs are also loaded into the platform. Thus, it is possible that the instructions generated by the service creation tool will include calls to other associated programs which are executed on the speech applications platform itself.

Thus, at step 64 loaded C++ programs are compiled into executable platform specific code and at step 65 said programs are arranged to run on the speech applications platform, thereby placing said speech application into a live condition.

### SERVICE CREATION AND VALIDATION

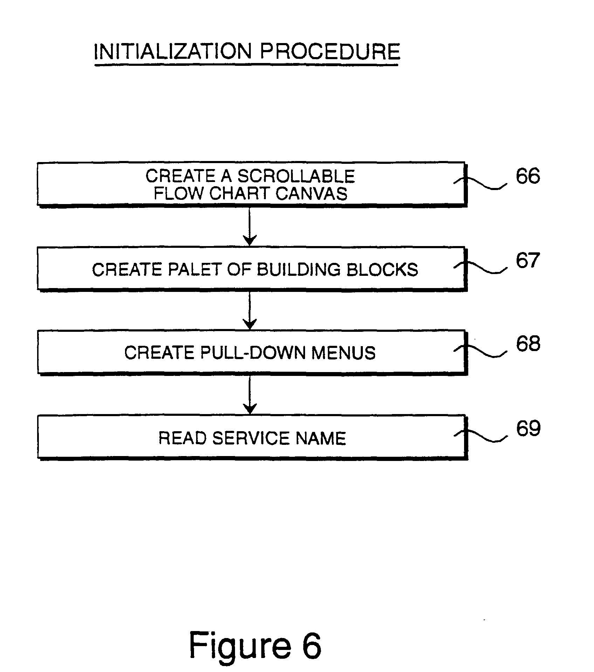

Prior to step 51, the service creation platform is initialized so as to provide a starting point for the generation of a service. The initialization steps are performed automatically by the service creation software, and are detailed in Figure 6.

At step 66 a scrollable flow chart canvas is created, using subroutines provided as part of the operating system supplied under the trade mark "WINDOWS" and a scrollable window is created by placing a window larger than the screen size behind a second window which occupies the whole of the screen. Thus, the larger window may be moved relative to the smaller window, creating the impression of a canvas larger than that on the screen area being scrolled relative to the screen.

At step 67 a menu of functional building blocks is created from which individual building blocks may be selected for placement on the scrollable canvas. At step 68 additional pull down menus are defined, which provide the various commands necessary for parameter entry, and navigation through the process of service creation on the service creation platform. At step 69 a service name is requested by the service creation platform, which after having been entered by the user, is read by the service creation software and displayed on the screen. Thus, after step 69 all the instructions required to create an environment for defining a service have been executed and an operator may then proceed with service definition.

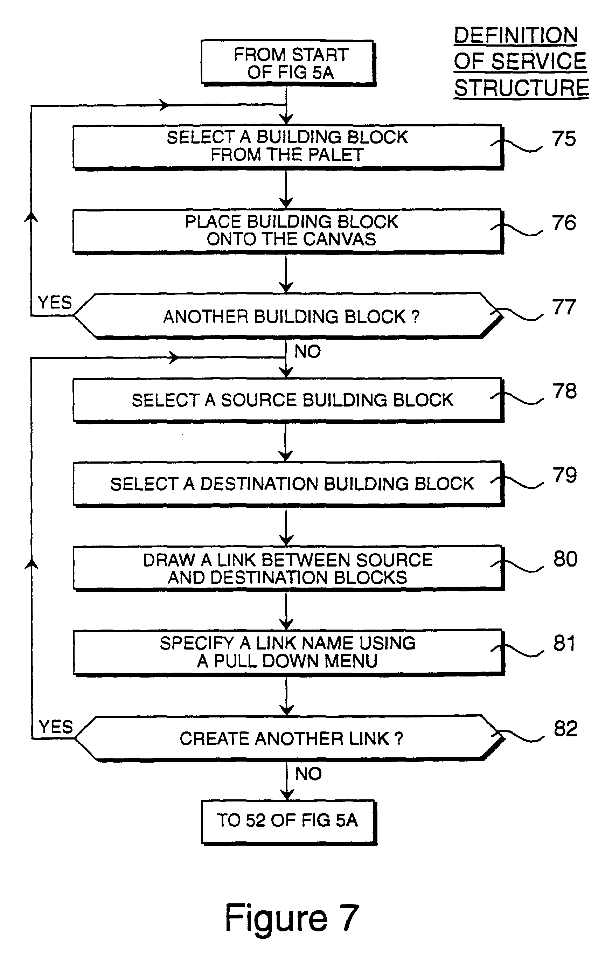

Procedures for defining a service (steps 51-56) in Figure 7, are detailed in Figure 7. At step 75 a building block is selected by operation of the mouse 39. This involves directing the mouse so that the displayed cursor appears over a particular block in the block menu. A mouse button is pressed and held down so that the block identifies itself as being selected by changing color. Further movements of the mouse while holding down the mouse button result in the block being "dragged" over the canvas. Once positioned, release of the mouse button effectively releases the building block, allowing a functional copy of the block to be left on the canvas, thereafter returning to its original colour.

At step 77 a question is asked as to whether another building block is required and when answered in the affirmative, control is returned to step 75. It should be appreciated that each of the available building blocks may be copied onto the canvas any number of times, subject to space being available. If a flow chart is very large and insufficient space is available on the canvas, subcanvases can be created, also referred to as pages.

After the required building blocks have been placed on the canvas and a question asked at step 77 has been answered in the negative, logical links are defined to specify the logical flow between building blocks.

At step 78, a source building block is selected by positioning the cursor over a block, via the mouse, whereafter the selected block changes colour to show that it has been selected.

After the source building block has been selected, a destination building block, is selected by further operation of the mouse, at step 79. After selection of the destination building block, a link is drawn at step 80 from the source block to the destination block and the colour of the source building block is returned to its normal hue. The direction of flow is also represented in the diagram by means of an arrowhead, pointing from the source building block to the destination building block.

At step 81, a name is specified for the link, derived from a pull-down menu of possible link names, suitable for the originating source building block. A default name may be "ok", specifying that the flow is working correctly and may proceed to the next stage. Alternatively, a plurality of links may extend from a single building block, for example two links may extend from the building block, a first representing an answer "yes" and a second representing an answer "no". Other options may be possible, such as a range of numbers or logical conditions such as "true" and "false".

At step 82, a question is asked as to whether another link is to be created and if answered in the affirmative, control is returned to step 79. After all of the required building blocks have been copied and all of the necessary links have been created (a question asked at step 82 being answered in the negative) validation procedures are effected, as shown by step 52 in Figure 5A.

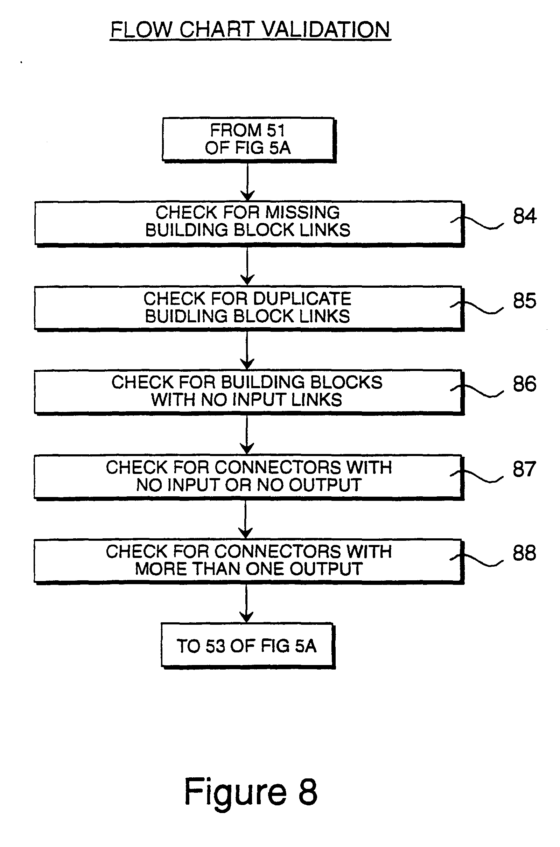

Validation procedures, identified at step 52, are detailed in Figure 8. At step 84, a check is made to confirm that the building blocks have the correct number of output links. The number of output links emanating from a building block is related directly to the functions performed by that building block, and thus it is possible for software to detect a discrepancy between the number of output links defined and the number predicted by the logical function of the block. However, it should be noted that the number of input links is not predictable in this way.

At step 85 a check is made to establish whether any of the building block links have been duplicated. Thus, a building block may require two outputs and two outputs may be present in the overall structure, thereby the structure will pass the test exercised at step 84. However, with, for example, two outputs it may be necessary to have output links which specify, for example, "yes" and "no" and it is possible that both of said links may have been identified as "yes" and this condition, a duplication, will be identified at step 85.

At step 86, a check is made to establish whether any of the building blocks do not have an input link, because if no input link is present it is never possible for control to enter that block and a fault must be present.

Connector blocks may be present which improve the aesthetic appearance of the links. In addition, connector blocks may be used to combine two or more output links into a single input link. However, all connectors should have one output and at least one input. At step 87, a check is made to ensure that all of the connectors have at least one input and at least one output.

At step 88, a check is made to ensure that none of the connectors have more than one output. It should be noted that a connector can only have one output, given that the output from a connector can only go in one direction. As shown at step 53 in Figure 5A, if validation is successful, parameters may now be entered into the blocks.

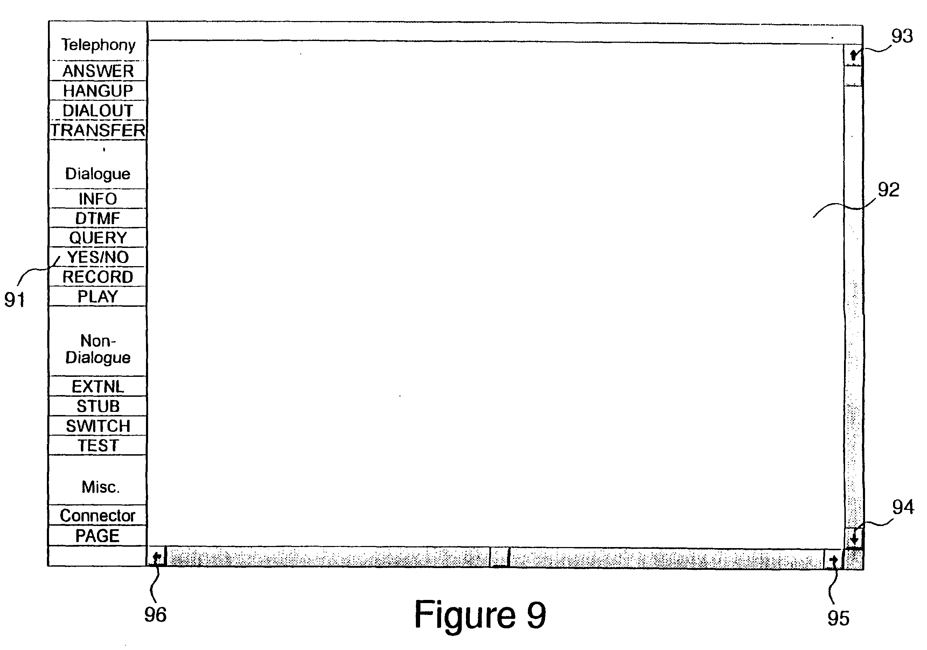

The initialization procedures detailed in Figure 6 result in a screen being displayed of the type shown in Figure 9. The screen shows a menu 91 of available blocks, along with a scrollable canvas 93. The canvas is scrolled by placing a mouse pointer over a displayed arrow 93, 94, 95 or 96. Activating arrow 93 results in the canvas being scrolled downwards, such that the upper regions of the canvas are displayed through the viewing window. Similarly, operation of displayed arrow 94 results in the canvas Theing scrolled upwards so that its lower regions are displayed through the window. Similar operation of arrows 95 and 96 result in the canvas being scrolled to the left and to the right respectively. Thus, by operation of these arrows, it is possible to scroll the canvas such that any area of the canvas is displayable through the viewing window.

The building blocks which may be selected from the block menu 91 consist of blocks for "Answer", "Hangup", "Dialout", "Transfer", "Info", "DTMF", "Query", "Yes/No", "Record", "Play", "External", "Stub", "Switch", "Test", "Connector" and "Page".

After a flow chart containing blocks has been defined and validated, it is possible to create blocks on another page by selecting the page block. When a page block is selected it is displayed on the canvas on a similar way to other blocks which may be displayed on the canvas. However, on selecting said page block by clicking a mouse button while pointing at said page block, another canvas page is displayed, upon which further blocks may be copied thereon. Thus, a page block represents an entire canvas at a lower level, itself providing a canvas for operational blocks to be described thereon.

Building block parameters are entered by selecting a specific block, via suitable operation of the mouse, which then results in a block proforma being opened for that specific block. Block proforma provide the mechanism by which the block is given a name, whereafter block parameters are written to a respective named block text file.

Each block displays a soft button marked "OK". Operation of this button, via the mouse, results in a program being executed which writes parameters inserted within the block to the respective text file in the form of a script.

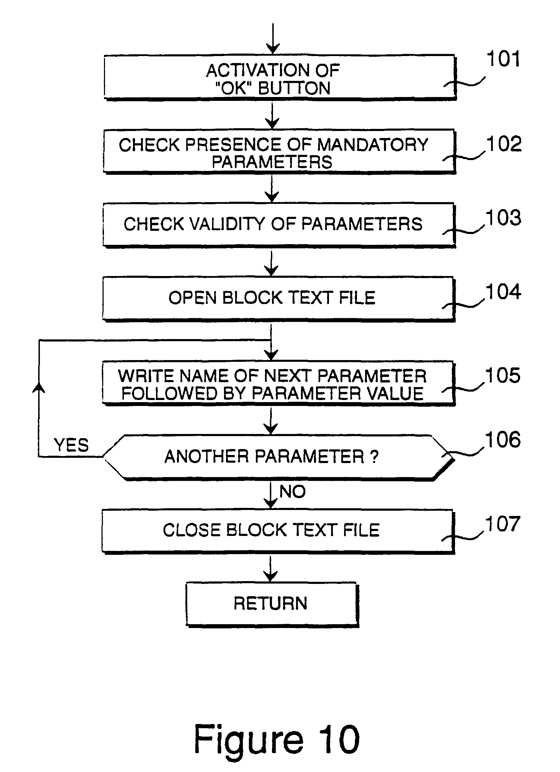

An example of writing data defined for a block into a text file is shown in Figure 10. At step 101 the routine is initiated in response to an operator selecting the "OK" button on the respective block. At step 102 a check is made to ensure that mandatory parameters are present. Thus, step 102 will check that the block has been given a name and that parameters essential for the operation of that block have been entered by the operator. Clearly, these parameters will be block specific and are detailed subsequently for each of said blocks. If any of the mandatory parameters are absent, the procedure detailed in Figure 10 is terminated and an operator is invited to define parameters via the appropriate block proforma.

At step 103 a check is made to ensure that the parameters entered into the block are valid. Thus, the block name must be specified by characters which can be used as a file name within an appropriate operating environment. Similarly defined durations must fall within allowable meaningful constraints.

At step 104 a text file is opened and identified by the name of the block in combination with the extension ".TXT". Thereafter, at step 105 text is written to the file opened at step 104 by writing the name of a parameter followed by the parameter's value. At step 106 a question is asked as to whether another parameter is present and if answered in the affirmative, control is returned to step 105.

Eventually all of the parameters will have been considered and written to the appropriate text file at step 105, resulting in a question asked at step 106 being answered in the negative, thereby directing control to step 107. At step 107 the block text file is closed and control is returned to procedures implementing the interactive graphical user interface, as displayed in Figure 9.

### DETAILS OF BLOCK PROFORMA

The specific block proforma will now be detailed, along with an indication of the text files generated on execution of the routine detailed in Figure 10. Reference will be made to the procedures executed at step 105, when parameter names and values are written to an associated text file. It should be noted that a text file containing a script definition of parameters is generated for each copy of a block placed upon the canvas. A unique block name is defined by the service designer for each specific block used within the service.

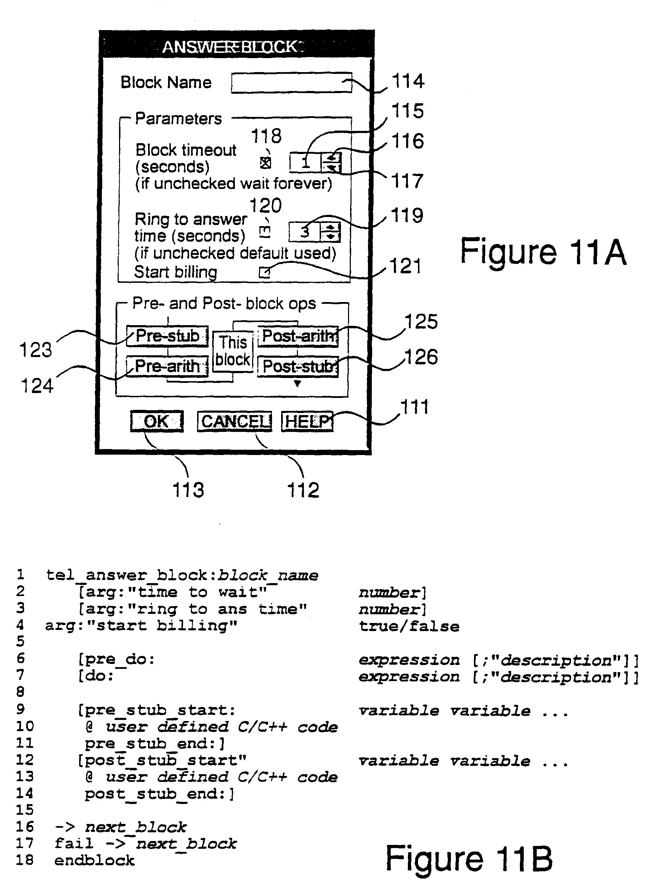

The line numbers shown in Figure 11B and in subsequent figures are provided for the purpose of explanation, and will not be present in the actual script that is generated. A protocol has been adopted for describing the lines of script which is similar to that used when defining computer languages. Text in italics indicates a name or parameter which is dependent on context and thus cannot be indicated within the formal specification of the script. Text between square brackets is optional and may or may not be included in a particular instance of the script for a block.

A proforma for an Answer block is shown in Figure 11A. An answer block instructs a service to wait for an incoming call. A complete listing of the text which may be derived from parameters defined within an answer block proforma is shown in Figure 11B.

While information is being entered into the proforma shown in Figure 11A, a help button 111 may be selected, resulting in text being displayed in order to provide help to an inexperienced operator. Similarly, after parameters have been entered in a specific field, a cancel button 112 may be selected which will delete modifications just made to that field. As shown in the subsequent figures, a help button and a cancel button are provided for each block proforma.

After data has been entered into the answer block, execution of an "OK" button 113 initiates an update of the script file using data in a format such as that shown in Figure 11B. An "OK" button of this type is provided in each block proforma and as previously stated this results in the execution of a procedure of the type shown in Figure 10.

The answer block is given a unique name in field 114 and if more than one answer block is present within the service, said blocks must be given different names so that they can be subsequently distinguished. The block name is inserted after the block name identifier at line 1 of the text file shown in Figure 11B. The first part of the line identifies the text file as relating to an answer block by the text "tel_answer_block:" and, as previously stated, on execution of the "OK" button the first line is written to the text file as shown at line 1 of Figure 11B, with the specific block name identified at field 114.

A block time out period is specified at field 115, which may be incremented or decremented, using buttons 116 and 117 respectively. Alternatively, if a soft toggle 118 is left unchecked, the system will effectively wait forever at the answer block until a call is received. Thus, the block time out period specifies the time during which the system will wait for an incoming call, which is written to line 2 of the text file in the form arg: "time to wait" followed by the number entered at field 115. However, if soft toggle 118 is left unchecked, line 2 is omitted from the text file, indicated by the use of square brackets surrounding the line 2 text.

Similarly, a ring to answer time is specified at field 119, resulting in data being written to line 3 of the text file in the form arg:"ring to ans time" followed by a number representing the time during which the system will allow an incoming call to ring before it is actually answered. Again, a soft toggle 120 is provided which will result in data being written to line 3 only if checked, otherwise default values are used.

It is possible for a customer to be billed for the service and billed time may start when the service answers a customer's call, i.e., where an answer block responds to an incoming call. A soft toggle 121 is provided which when checked results in the call being charged to the customer's account. This field results in data specified in line 4 of Figure 11B being written to the text file, in the form arg: "start billing" true. Alternatively, the word "true" is replaced by the word "false" if the soft toggle 121 has not been checked.

Region 122 includes fields 123, 124, 125 and 126 for pre-stub procedures, pre-arithmetic procedures, post-arithmetic procedures and post-stub procedures respectively. These result in lines of text being defined from line 6 to line 14 and similar provisions are made in all of the blocks provided within the service. The use of the region 122 will be described subsequently.

After expressions derived from region 122 have been written to the text file, conditions for continuing to the next block are specified. Thus, line 16 of the text file identifies the next block to be executed if the execution of the answer block is successful. Similarly, line 17 identifies the next block to be executed if the answer block fails. However, it is important to note that these specific block names are not defined within the answer block proforma but are derived from the topology created on the canvas.

The text file is finally delimited by line 18 specifying "endblock".

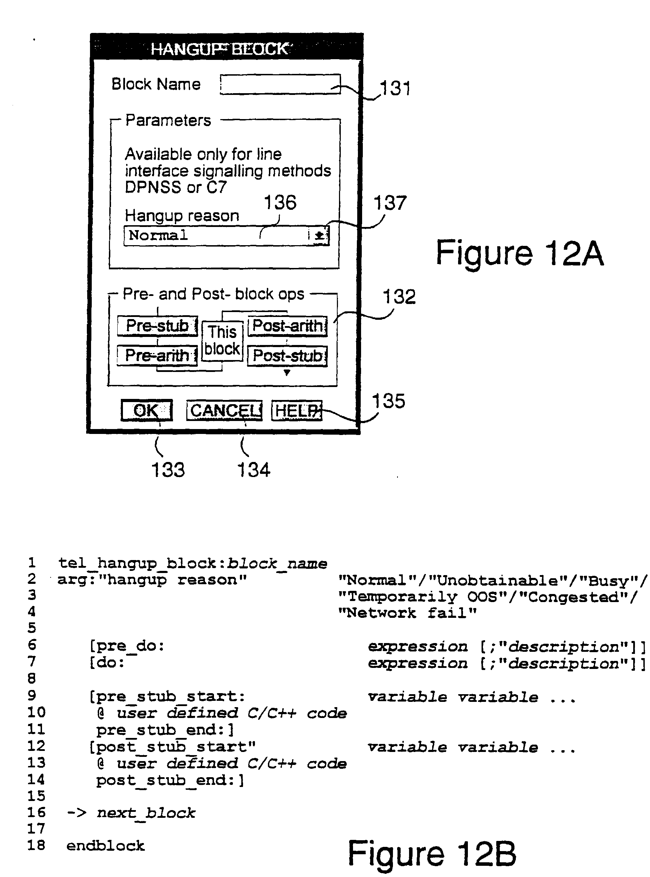

A proforma for a hangup block is shown in Figure 12A. A hangup block instructs the service to disconnect a calling customer and would therefore tend to be used at the end of a service, after communication between a calling customer and the service itself has finished. A complete listing of the text which may derived from parameters defined within a hangup block proforma is shown in Figure 12B. As previously stated, the line numbers are merely provided for the purpose of identifying specific lines within the example and do not represent absolute line positions of code in the file. A unique name field 131 is provided, along with a stub and arithmetic region 132, an OK button 133, a cancel button 134 and a help button 135, which are substantially equivalent to similar regions described with respect to Figure 11A. These regions are also present in all subsequent blocks and it should be understood that their operation is substantially similar to that as described with reference to Figure 11A.

Under some operating conditions, it is possible to identify a hangup reason at field 136, which is then specified at line 2 of the text file. A scroll bar 137 is provided, the activation of which causes the system to scroll through the available hangup reasons, consisting of normal, unobtainable, busy, temporarily out of service, congested or network fail.

At line 16 the next block in the service is specified, again derived from the network topology and the block delimiter "end block" is written to the text file of line 18.

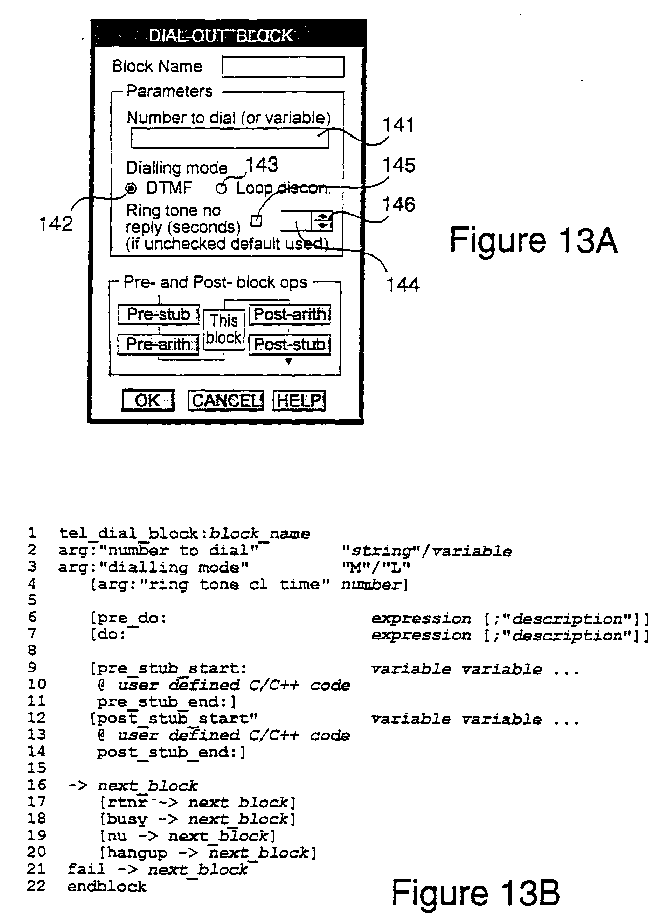

A proforma for a dial out block is shown in Figure 13A. A dial out block allows a system to dial out to another telephone number and may therefore be used when obtaining information from another system or when transferring a call etc.

A number to dial out, or a variable identifying a location at which a dial out number can be obtained, is specified at region 141, resulting in an instruction being written at line 2 in the form arg:"number to dial" followed by the number to be dialled or an identification of a variable.

The block can dial out in dual tone multifrequency mode or in loop disconnection mode. A soft toggle is provided in the form in which region 142 may be selected by the mouse or, exclusively, region 143 may be selected by operation of the mouse. As shown in Figure 13A, region 142 has been selected and selection of region 143, by suitable operation of the mouse, will result in region 143 being checked and region 142 be de-checked. Dialling mode selection results in an instruction being written at line 3 in the form arg:"dialling mode" followed by an indication "M" for multifrequency or "L" for loop disconnection.

A period may be set at region 144, specifying the period over which the system will wait for a call to be answered. If field 145 is left unchecked it is not necessary to enter a figure in field 144 and a ring time default value is used. The checking of field 145 results in the value entered at field 144 being included in optional instructions at line 4, in the form arg:"ring tone cl time" followed by the selected number. The ring time selection is made by operation of scroll bars 146, such that said period may only be defined from a closed set of available options.

Next block options are written to the text file between line 16 and 21, derived from the network topology and the end block delimiter is written to line 22.

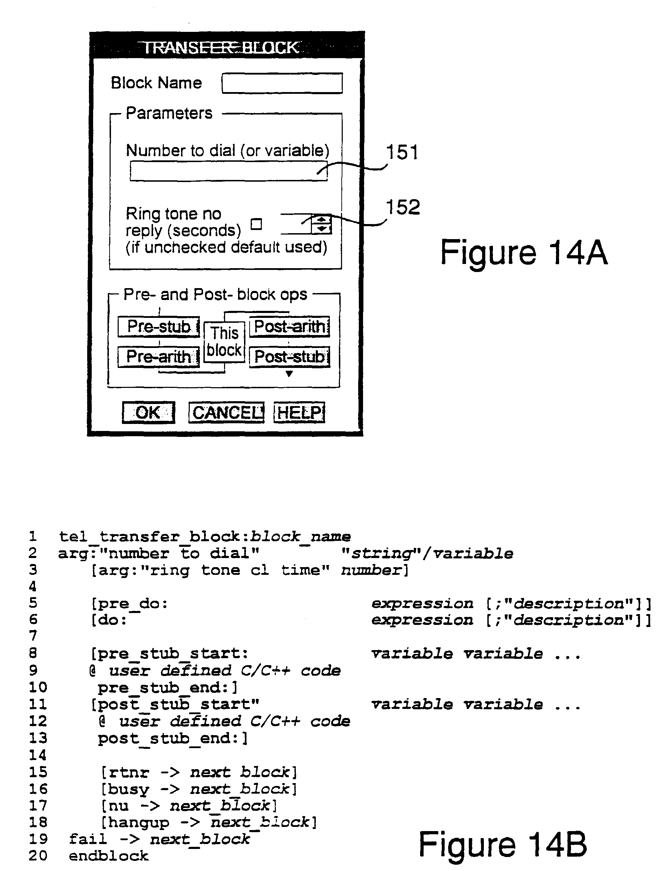

A proforma for a transfer block is shown in Figure 14A. A transfer block contacts another telephone line and, if successful, transfers the calling customer to that line. A number to dial field 151 is substantially similar to field 141 of Figure 13A and results in similar instructions being written to line 2 of the text file. Similarly, a reply period may be specified in field 152, resulting in similar instructions being written to line 3 of the text file. Again, next block conditions are written lines 15 and 19 of the text file and the end block delimiter is written to line 20.

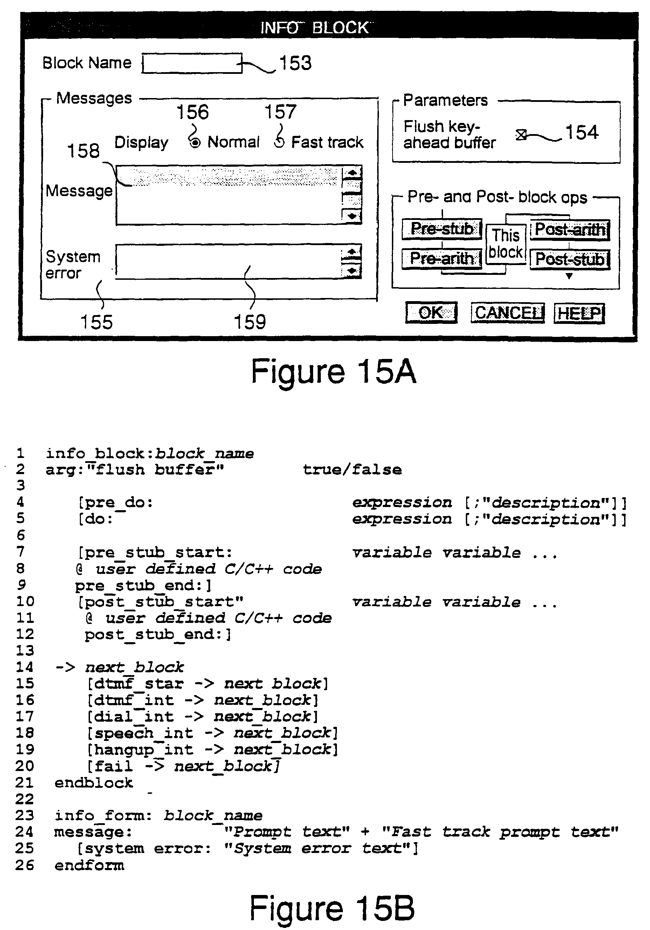

A proforma for an infoblock is shown in Figure 15A. An infoblock supplies information to a calling customer, which is often facilitated in response to a selection being made. A complete listing of the text which may be derived from parameters defined within an infoblock proforma is shown in Figure 15B. A unique block name is specified in field 153, resulting in an instruction being written to line 1 of the text file in the form info-block: followed by said name. A soft toggle 154 is provided which, when checked, flushes a key-ahead buffer, which may contain indications of selections previously made by a calling customer by operation of the customer's keypad. This results in instructions being written to line 2 of the text file in the form arg:"flush buffer" followed by an indication of true or false, depending upon whether soft toggle 154 has been checked.

A region 155 is provided for containing details of messages. Two types of messages may be defined. Normal messages are defined when soft button 156 is selected and, similarly, fast track messages are defined when button 157 is selected. Fast track messages are the type which allow system operation to be speeded up for customers who are familiar with the service or familiar with services of this type.

Text files which contain message data or speech recognition data are separated into two parts, given that, ultimately, the completed script will be specified by two files per service page, consisting of a page file defining logical operations and a form file containing message and recognition data.

Thus, next block commands are specified between lines 14 and 20, whereafter, at line 21, the end block delimiter is specified.

Form information is specified from line 23 onwards. Thus, line 23 indicates the start of the form information by the instruction info-form: followed by the block name.

A voice message communicated to a calling customer under normal operation is specified in field 158 and a system error message may be specified at field 159. The message specified within field 158 results in instructions being written to line 24 in the form message: followed by particular message data, contained within inverted commas, in a predefined order for each of the specified messages. Similarly, if a system error message is specified within field 159, instructions are written to line 25 in the form system error: followed by a system error text within inverted commas. This constitutes the end of the message information for the block, therefore the text file is delimited by an instruction end form at line 26.

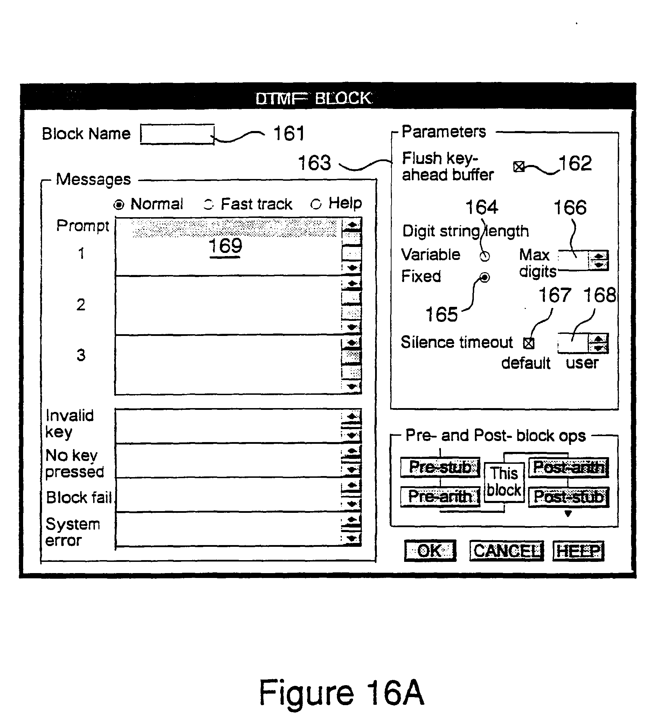

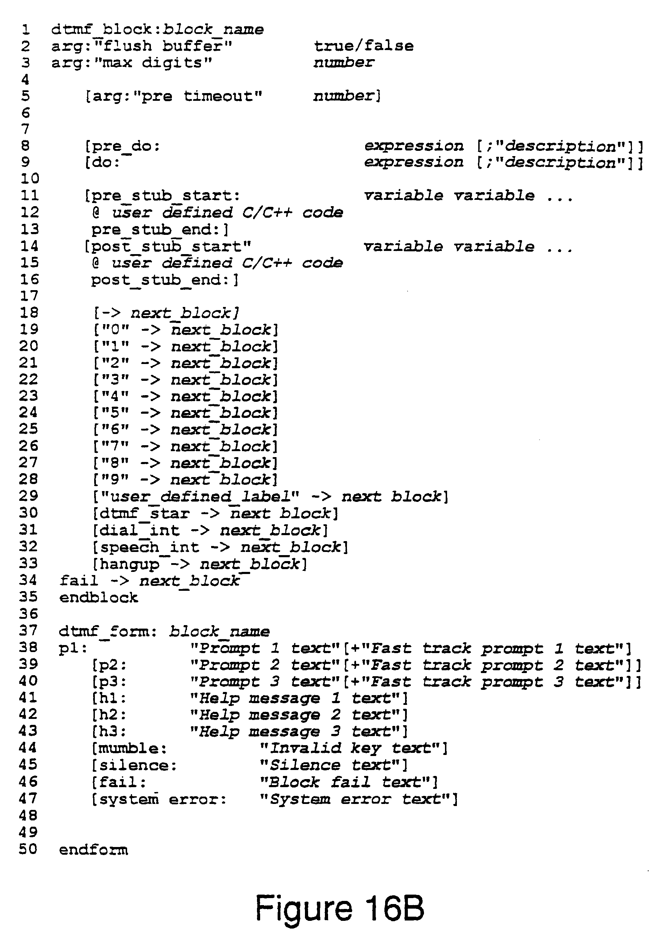

A proforma for a DTMF block is shown in Figure 16A. A DTMF block is arranged to receive DTMF signalling, i.e. touch tone signalling, from a calling customer and thereafter make decisions in response to the information received. Thus, in most applications, the next block to be processed will depend upon the actual information received from the calling customer in the form of a key depression. A complete listing of the text which may be derived from parameters defined within a DTMF block proforma is detailed in Figure 16B.

A block name is specified at field 161, resulting in an instruction DTMF-block: followed by the block name being written at line 1 and DTMF-form: followed by the block name being written at line 37. Thus, instructions relating to logical operation are written following line 1, whereafter message information is specified following line 37.

A soft toggle 162, within a parameters region 163, allows an operator to select whether the key ahead buffer is to be flushed, resulting in an instruction being written at line 2 in the form arg:"flush buffer" followed by an indication true or false.

A DTMF block is capable of responding to a fixed number of digits or to a variable number of digits. Thus, soft button 164 is selected if the particular block is to respond to a variable number of digits or soft button 165 is selected if the block is to respond to a fixed number of digits. When button 165 is selected the actual number of digits to which the system will respond is specified within field 166.

This results in an instruction being written to line 3 in the form of arg: "max digits" followed by a number indicating the maximum number of digits expected.

Checking of a soft toggle 167 allows a silence time out period to be specified at field 168, which in turn results in an instruction being written to line 5 in the form of arg:"pre time out" followed by an indication of the time out period. Thus, the block will wait for incoming tones for a period specified by the silence time out. Alternatively, if soft toggle 167 is not checked, the silence time out default period will be used.

An important aspect of DTMF blocks is the definition of what happens after a particular DTMF tone has been received. This information is defined within the topology of the system and analysis of this topology results in instructions being written between lines 18 and 34, followed by the end block delimiter at line 35.

As previously stated, line 37 specifies the start of the form information. A first prompt must be specified in field 169, resulting in an instruction being written to the text file at line 38 in the form P1: followed by the first prompt message. Subsequent prompts, help messages, mumble, silence and fail messages may also be specified, resulting in instructions being written to subsequent lines, up to line 47. Finally, the end of the file is specified by the delimiter end form at line 50.

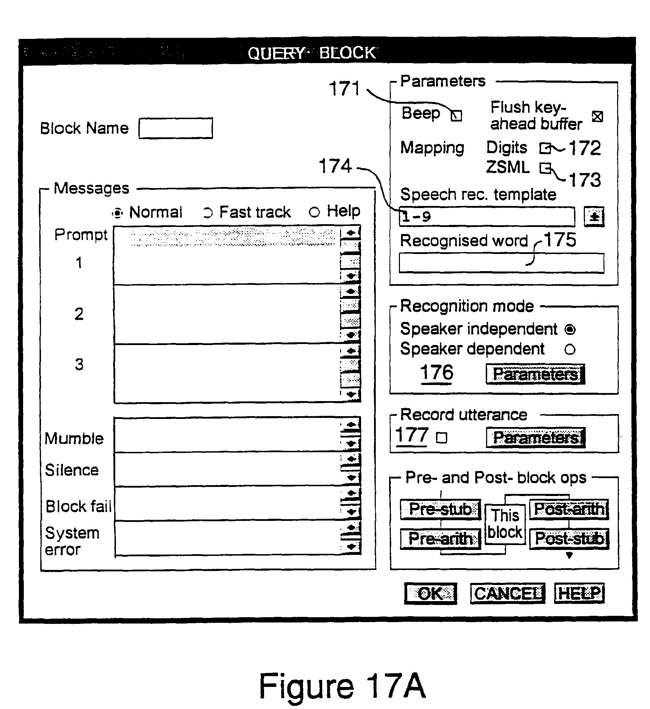

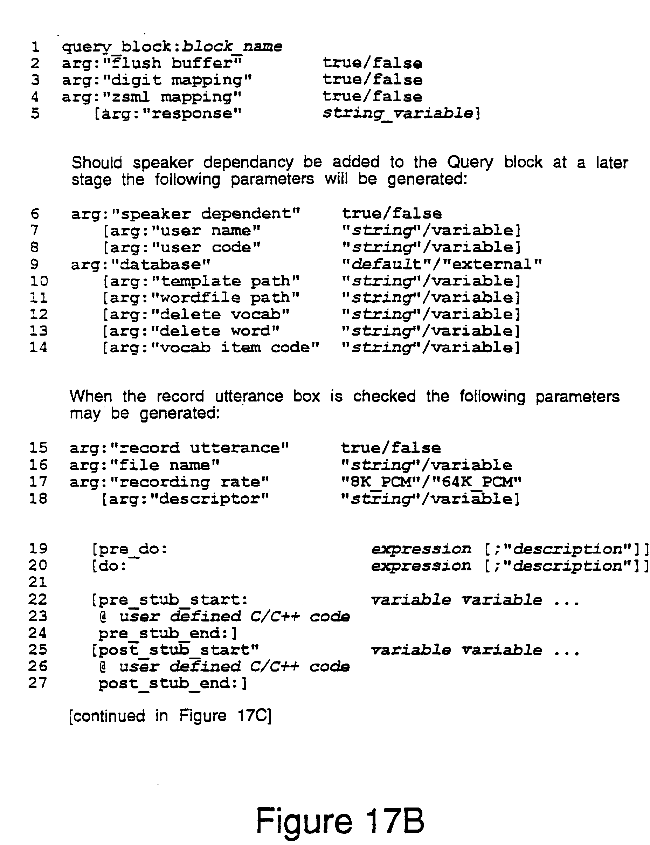

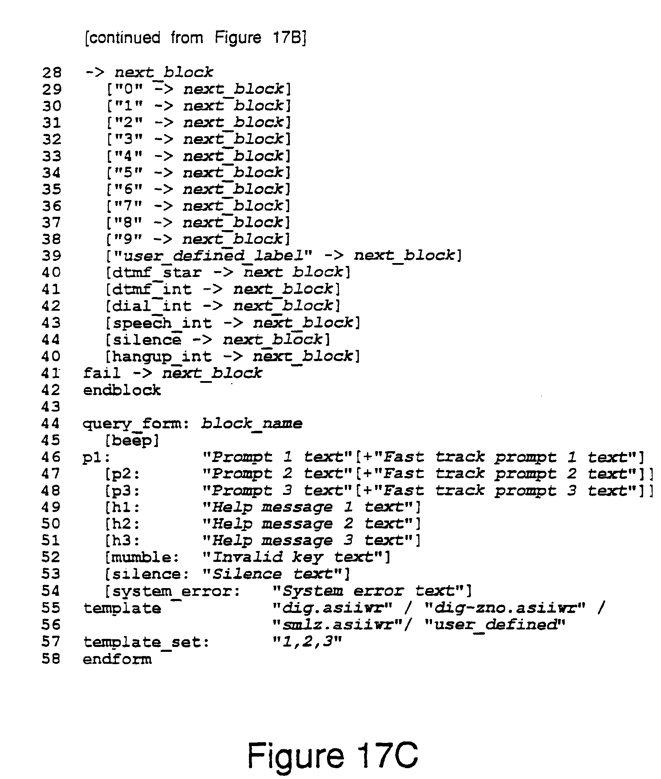

A proforma for a query block is shown in Figure 17A. This block is used to obtain a caller's spoken response to a message prompt. It enables a caller to communicate verbally with the service, for example by reading out the number on a credit card. A soft toggle 171 is provided to switch on or off a beep tone which may indicate to the caller when to speak. When this soft toggle is checked, line 45 of Figure 17C is included in the form file that is generated. Soft toggles affecting the optimisation of the speech recognition process are provided for digit oprimisation 172 and ZSML (zero space medium length) oprimisation 173. Digit optimisation indicates that expected replies are to include individual spoken digits "zero" thru "nine", and ZSML optimisation indicates that the user may not pause between speaking the digits. Digit and ZSML optimisation is selected by the commands shown at lines 3 and 4 respectively of Figure 17B.

A speech recognition template is specified in field 174, such that the possible range of replies has a template against which to compare incoming speech patterns. For example, so that the speech recognition software need only distinguish between ten different words (in the case of "zero" thru "nine"). The speech recognition template results in a series of valid answer lines such as those specified in lines 29 to 38 of Figure 17C. When a word has been recognized it is placed in the string variable specified by a name entered in field 175, and which is specified in line 5 of Figure 17B.

Speaker dependency may be selected using soft toggle buttons in field 176, such that more complex utterances may be recognized from a specific individual than would be possible given the wide range of speaker styles that must be dealt with when the recognition process is speaker independent. Detailed parameters may be specified for speaker dependency by selecting the parameters button 177, which results in the user being presented with an additional window in which parameters may be specified. These additional parameters are specified in lines 6 to 14 of Figure 17B.

The record utterance field 178 allows actual speech to be digitized and stored in a file, which may be subsequently referred to by other blocks or programs on the applications platform. For example this may be used as part of an automated telephone answering system where each message is recorded for later playback when a customer requests that his or her messages are played back. Record utterance data is specified in lines 15 to 18 of Figure 17B. "Mumble", and "Silence" message fields are provided in the query block to define an appropriate response to unclear speech or silence respectively.

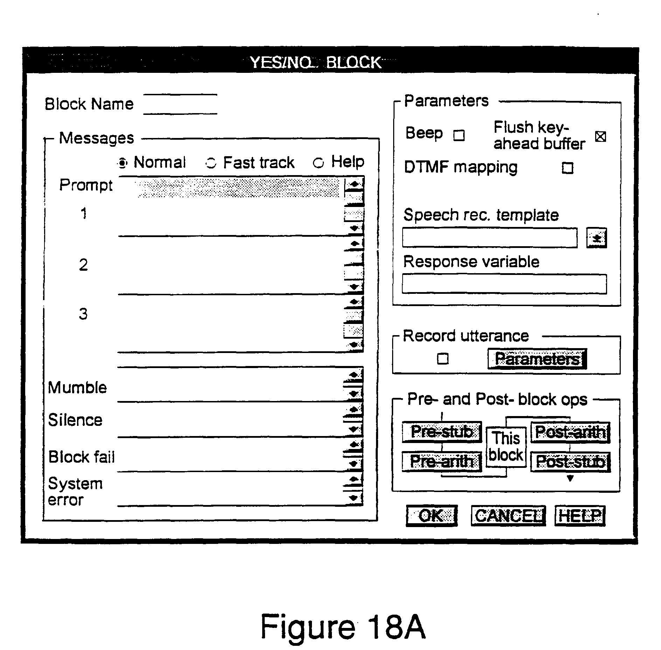

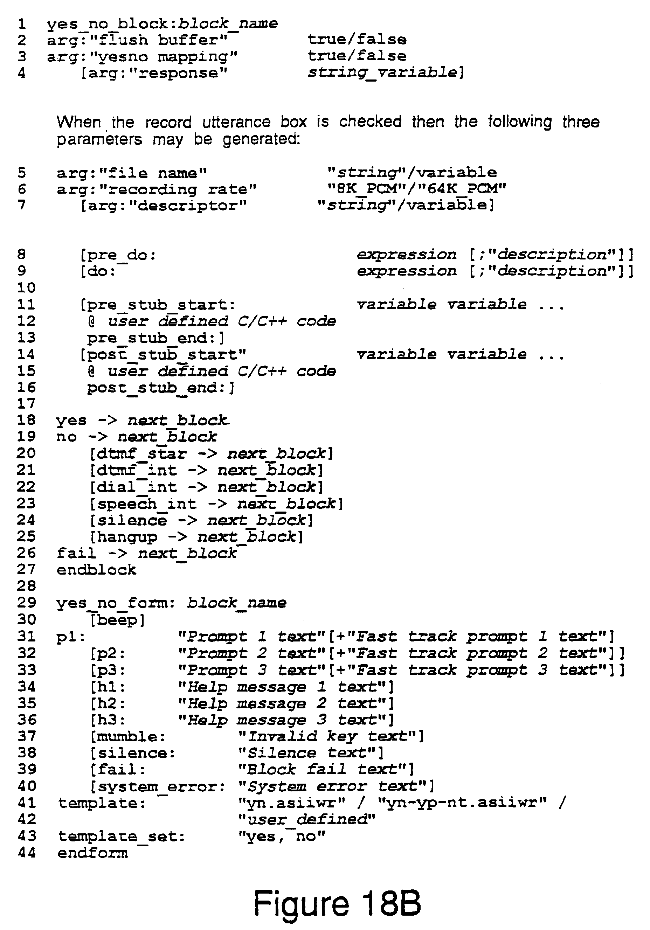

The yes/no block shown in Figure 18A provides a similar function to the query block described above. In this block only two words are recognized - yes and no, and thus speech recognition is simplified, obviating the need for a speaker dependent mode of recognition, and ZSML optimisation. In all other respects the operation of this block is identical to the query block. The script specification for the yes/no block is shown in Figure 18B.

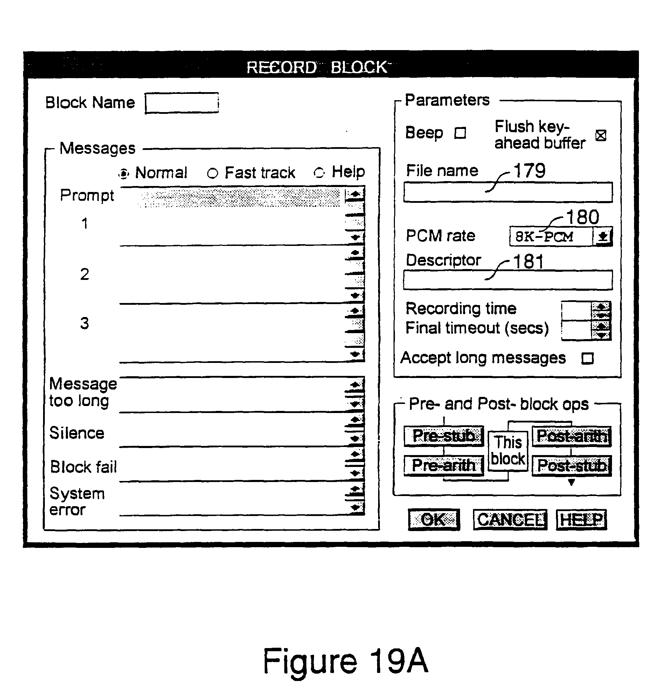

The record block shown in Figure 19A is used to record a caller's message, having first played a specified message prompt. The file name in which digitized speech is stored is specified in field 179. The bit rate of the digitized speech, or PCM rate, is specified in field 180. A descriptor field is provided to describe the contents of the speech file, for example "credit card address", or which may specify a variable containing a descriptor string specified previously, for example "your second call today was".

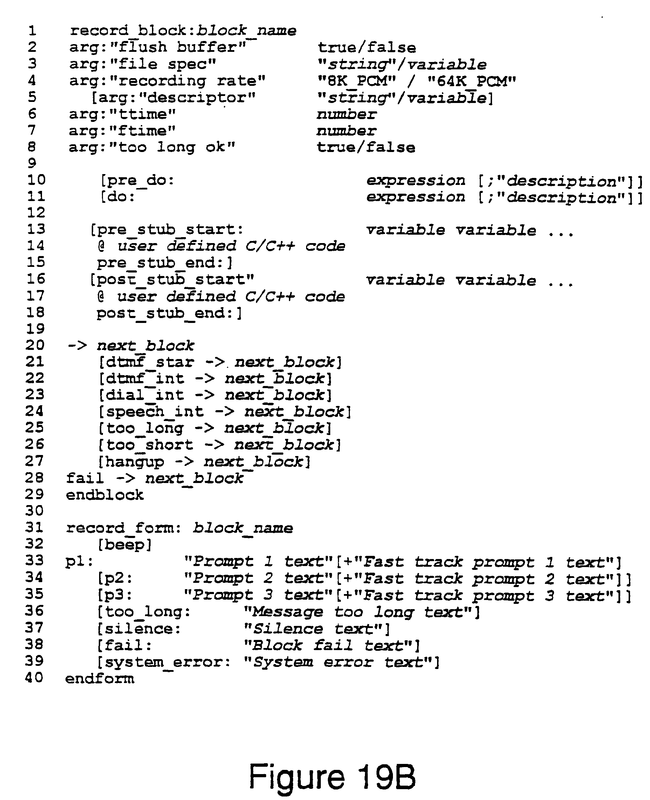

The recording time and final time out may be specified, to define the maximum length of a message in seconds, and the maximum length of tolerated silence before the block fails, respectively. An "Accept long messages" toggle is provided which, when checked, will prevent a block fail condition being generated if the caller speaks for longer than the maximum length of the recorded message (speech over the time limit will then be discarded). The script generated by the record block is specified in Figure 19B.

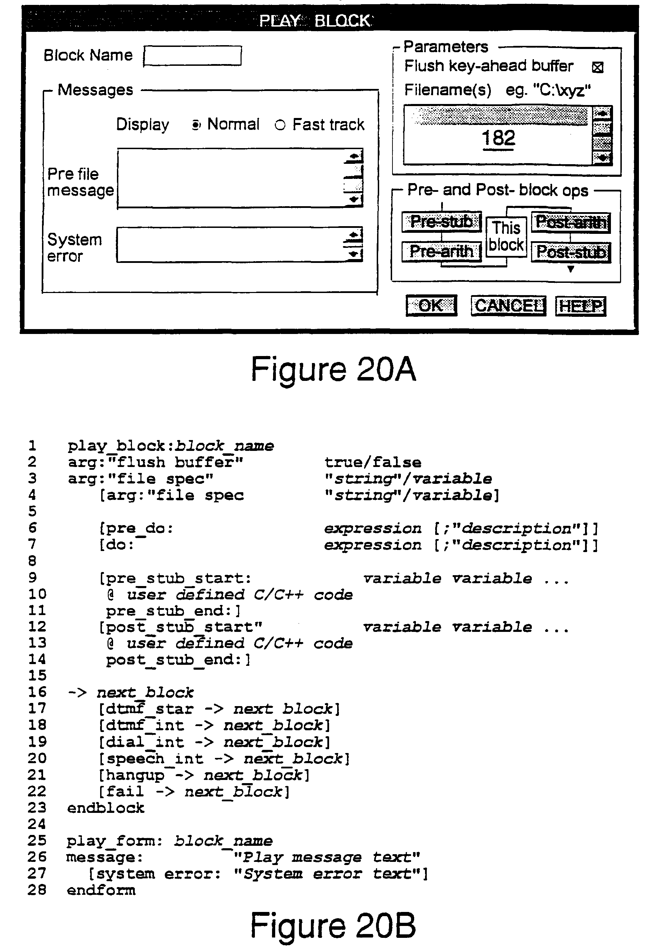

A play block is detailed in Figure 20A. This plays one or more previously recorded messages held in specified files, such as those generated by execution of a record block. A plurality of file names may be specified in the filename field 182. The script generated by the play block is specified in Figure 20B.

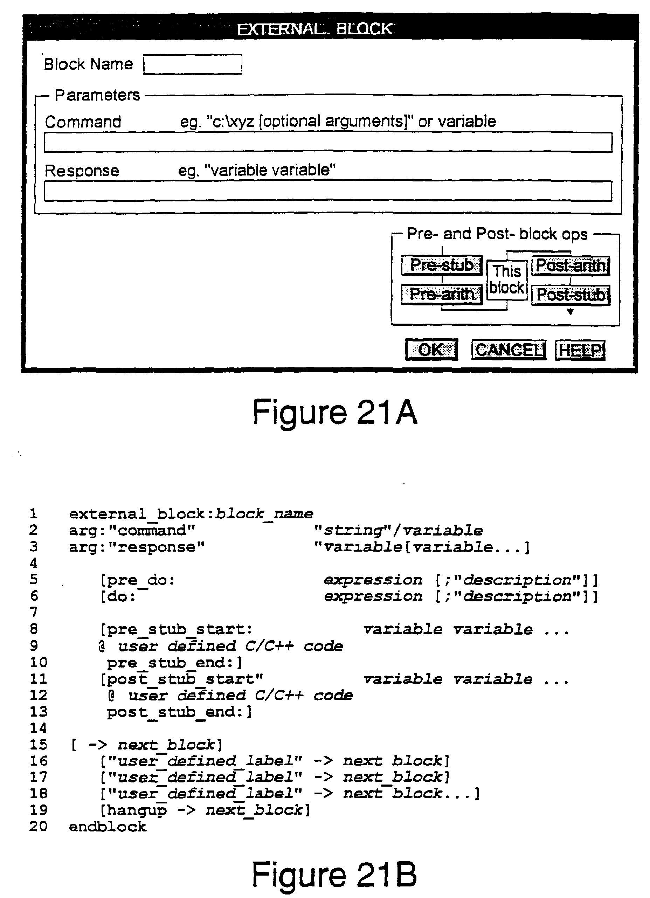

An external block is shown in Figure 21A. This block provides a means of two way communication with external executable programs (i.e. .EXE program). For example, an external block could provide a call to a company's database program, including arguments which may include the caller's name and customer account number. The database may then look up the customer's details, and return information including specific data, such as the current level of debt in the customer's trading account with the company. The script generated by an external block is specified in Figure 21B.

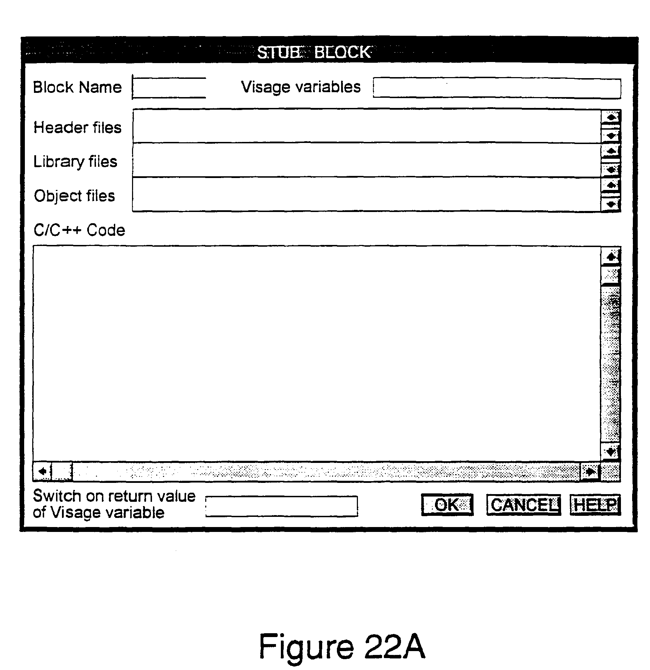

A stub block is shown in Figure 22A. This block allows ANSI C or C++ source code to be inserted into the application at the graphics user interface level. The C or C++ source code may manipulate variables and call routines that are referred to by other parts of the block diagram. However, operation at this level may require an intimate knowledge of the C or C++ operating environment generated by the applications development platform. Header files, library files and pre-compiled object files may all be specified for reference by the C or C++ code supplied in the stub block. Thus the C or C++ code may be used to access comprehensive utility software, such as the database example given for the external block.

By providing access to these types of functions at the C or C++ level, the user-defined C or C++ code, the utility software and the system software may all refer to each other efficiently, and be compiled at the same time. This enables manual and automated optimisation to be performed on the C or C++ code before it is compiled, resulting in faster, more efficient run-time software.

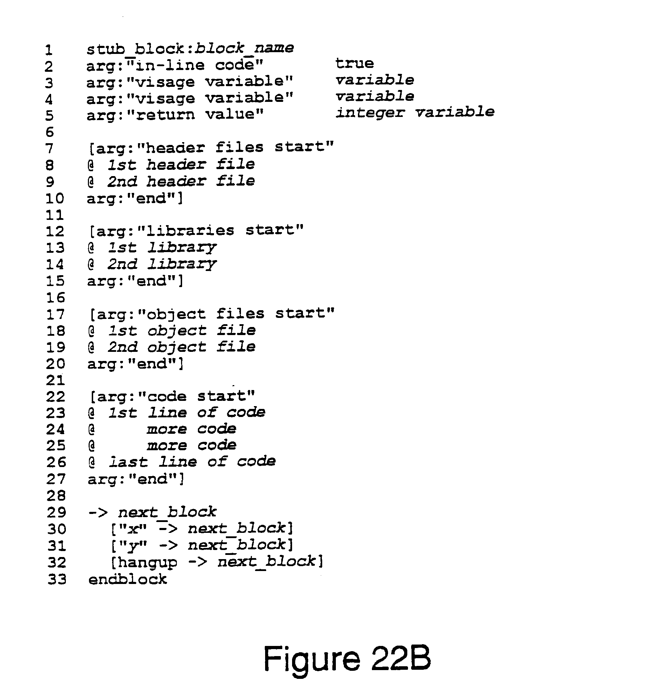

Furthermore, considerable flexibility is gained for service providers who wish to make modifications to the service by modifying the C or C++ code, as the entire system may be specified in C or C++ and subsequently modified at the C or C++ level. The script generated by a stub block is specified in Figure 22B.

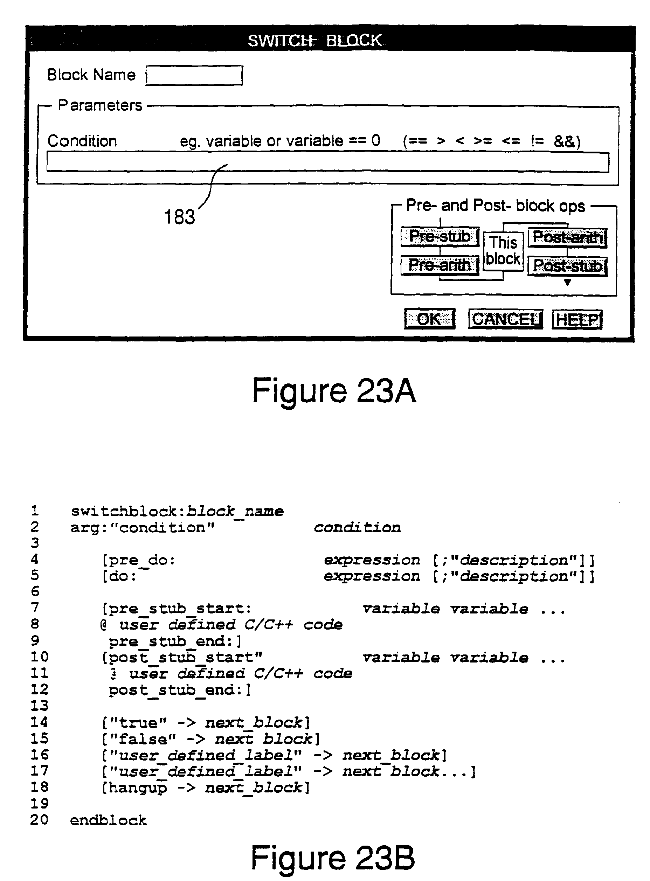

A switch block is shown in Figure 23A. This block provides a conditional test for selecting which of the possible subsequent blocks will be next in the service. An expression, in field 183, is evaluated according to C-like expression terminology. If the outcome of this is zero, this is given the Boolean indicator "true", or "false" if non-zero. Control flow may be switched according to specific values of a user defined link label, in which case a user defined link label is required for each value that the variable can take. The script generated by the switch block is specified in Figure 23B.

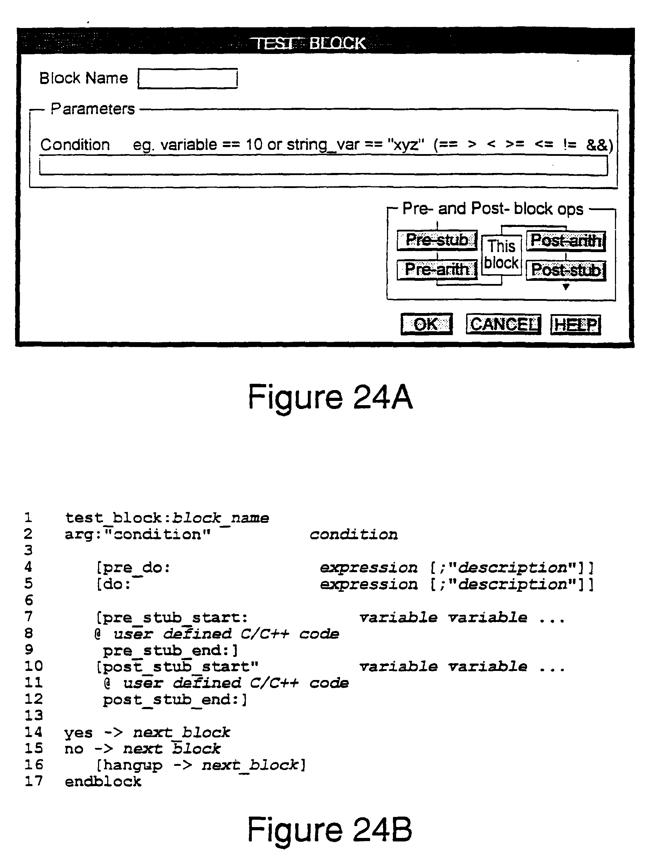

A test block is shown in Figure 24A. This block is similar to the switch block described above, except that the outcome can only evaluate to "yes" (zero) or "no" (non-zero). The control flow will be diverted along links labelled "yes" or "no" accordingly. The script generated for a test block is specified in Figure 24B.

### WORKED EXAMPLE FOR A SPECIFIC SERVICE

The service creation procedures identified in Figure 5A will now be described with reference to an example of an actual working service. The service which will be described allows a calling customer to call a specific number in order to obtain information relating to a performance, such as a musical concert etc. The service identifies itself and invites a calling customer to press button 1 in order to be provided with information identifying the nature of a performance or to press button 2 to obtain information identifying the availability of seats. After information of either type has been provided, the system hangs up. Thus, it should be understood that this service is identified here merely as an example of showing how services may be created. In an actual working service of this type, loops may be included such that both types of information may be available from a single call and more sophisticated aspects may be included, allowing a calling customer to book seats or to obtain information about performances into the future.

As identified at step 51 of Figure 5A, the first step consists of defining the service structure within the graphical user interface. Thus, after the initialisation procedure, as shown in Figure 6, has created a scrollable canvas, with a building block menu and pull down menus, a service name is defined and canvas of the type in Figure 9 is displayed.

In order to create the service identified above, it is necessary to select an answer block from menu 91 which will answer the incoming call. Thereafter, it is necessary to select a DTMF block, which will invite the customer to make a keypad selection and will thereafter respond to an incoming signal representing digit 1 and to an incoming signal representing digit 2. An infoblock is required in order to respond to an incoming digit 1, which in turn will convey information to the calling customer identifying the type of performance available on a particular day. Thereafter the system will hang up, so that it is necessary to include a hangup block. In order to respond to an incoming signal representing digit 2, it is necessary to obtain information concerning the availability of seats. Clearly, this data will require to be updated on a regular basis, therefore it is envisaged that the system will communicate with a database which keeps track of seat bookings. The call to the external database will require additional code to be developed and this code may be included with the overall system by means of an external block, an independent stub block or by means of a pre-stub or post-stub block contained within one of the other blocks. After the information has been received, a second infoblock is required in order to convey this information to the calling customer, whereafter the system again hangs up. A hangup block may receive many input links, therefore it will only be necessary to specify one hangup block.

A topology which implements the service identified above is detailed in Figure 25. The service is initiated by a start block 191, presented automatically by the system, having an OK link to an answer block 192 which has been given the unique name ans1. An OK link connects the answerblock 192 to DTMF block 193, given unique name dtmf1.

At the DTMF block, in response to a customer selected digit "1", control is directed from the DTMF block 193 to a first infoblock 195, given unique name info1. Thus, the link between DTMF block 193 and infoblock 195 is accompanied by a link name "1".

Similarly, a link between DTMF block 193 and an external block 194 is given link name "2" and said external block 194 is given unique name extn1. An OK link from block 194 connects it to a second infoblock, identified as "info2" which is relays information to the calling customer obtained from the external call made in the external block 194. After this information has been relayed to the customer the system hangs up, which is reflected by the "ok" link connecting the info block 196 to the hangup block 197.

The DTMF block 193 is also connected to the hangup block 197 by a "fail" link. Thus, if a customer fails to supply a digit "1" or a digit "2", a fail condition is identified by the DTMF block 193 and the system hangs up under the control of the hangup block 197. The hangup block 197 is given the unique name hang1 and thereafter control is directed to end block 198.

After the outline of the service topology has been specified, as shown in Figure 25, the structure is validated, as identified at step 52 of Figure 5A, to ensure that it is internally consistent and will allow a fully featured service to be developed therefrom. The structure shown in Figure 25 should result in the question asked at step 53 being answered in the affirmative, whereafter blocks may be selected for parameter entry at step 55 and text files updated at step 56.

Blocks may be selected for parameter entry in any order. Furthermore, when a block proforma has been called, parameters may be entered into that block in any order. Execution of the relevant "OK" button, such as button 113 shown in Figure 11A results in parameters being written to a text file containing script-encoded parameters such as those specified in Figure 11B. However, block parameters may be modified and the associated text file is similarly modifiable by further operation of the OK button. However, in this example, the parameterization of blocks will be described in a particular sequence, as it may actually be performed by an operator completing the service.

Answer block 192 is selected, resulting in an answer block proforma being displayed of the type shown in Figure 11A. An answer block proforma for this particular example is shown in Figure 26A. Block name ans1 has been entered in the block name field, resulting in an instruction tel_answer_block: ans1 being written to the first line of the text file shown in Figure 26B. The block time out soft toggle has not been checked, therefore the service will continue to wait at the answer block until a call is made. Consequently, it is not necessary for a related code to be written to the text file.

A ring to answer time has been specified in the block proforma, which results in the next line of the text file including the instruction arg:"ring to ans time" 3. Similarly, the start billing soft toggle has been checked, resulting in the next line of the text file including the instruction arg:"start billing" true.

No arithmetic or stub functions have been defined, therefore the next line includes next block directions followed finally by the end block delimiter.

After selecting the OK button for the answer block, resulting in the text file being modified, DTMF block 193 is selected and parameters added thereto as shown in Figure 27A. The block name dtmf1 is specified resulting in a first instruction for the associated text file of dtmf block: dtmf1.

The soft toggle for the flush key ahead buffer is set, therefore the next line of the text file specifies arg: "flush buffer" true. Similarly, the digit string has been set to the fixed option and the maximum number of digits has been specified at 1. Thus, the next line of the text file shown in Figure 27B includes the instruction arg:"max digits" 1.

The silence time out toggle has been set and the silence time out period has been specified at 8 seconds. Thus, the next line of the text file includes the instructions arg: "pre-time out" 8.

The DTMF block diverts control flow along one of a plurality of numbered flow lines. Thus if the caller presses "1" on the keypad, flow will be diverted along the flow line labelled "1". Similarly flow may be diverted along the flow line labelled "2". Script for both these possibilities is shown.

The start of prompt information is specified by an instruction line dtmf-form: dtmf 1 and the next line of the text file includes the prompt message entered in the first prompt message field. Thus, after selecting the first prompt message field a suitable message is inserted, such as "please press button 1 for details of tonight's concert or press button 2 for seat availability". This results in the following instruction on the next line p1:dtmf-form: dtmf1. A system error message is also included in the system error field in the form "sorry there is a technical fault". This results in a line of text in the form "system error: sorry there is a technical fault". The end of the text file and in particular the end of the form information is then identified by the instruction "end form".

Infoblock 195 may then be selected, resulting in an infoblock proforma being displayed, to which data is added as shown in Figure 28A. This results in a specific text file being generated as shown in Figure 28B.

External block 194 may be selected, resulting in an external block proforma being displayed, into which specific commands are entered as shown in Figure 29A, resulting in a text file being generated of the type shown in Figure 29B.

Infoblock 196 may be selected, resulting in a proforma for an infoblock being displayed, into which parameters are entered as shown in Figure 30A, resulting in the creation of the text file as shown in Figure 30B.

Hangup block 197 may be selected, resulting in a proforma for a hangup block being displayed. Parameters are entered into the hangup block proforma as shown in Figure 31A, resulting in a text file being generated as shown in Figure 31B.

Conventionally, specific speech applications were defined in terms of a written script, from which operational languages would be written manually by a programmer. Thus, in response to a script, a programmer would generate code in a form directly executable on a speech applications platform or, alternatively, code would be generated in an intermediate language, such as C or C++, allowing said code to be down-loaded onto different types of applications platforms. Page files generated by the present system are in a form which is meaningful to a human operator and resemble known scripting languages. Thus, a major aspect of the first stage of the present system may be considered as converting instructions defined within a graphical user interface into script files, referred to herein as page files and form files, which are human readable and machine readable.

Once the service has been completely defined as a flow chart and parameters have been entered into all of the block proforma as has been described, the next step in service creation is to translate the plurality of text files, each generated for a particular block during parameter entry, into page files and form files. In the present example only one page file and one form file will be generated to define the whole service. However, it should be noted that in more complex flow charts where page blocks are used to define an additional flow chart at a lower level, a single page file and a single form file is generated for a flow chart at each level. This may be thought of as being a page file for each "page" of the canvas which is in use, and page files and form files are always generated in pairs. In the event of multiple page and form files being generated, one of the page files will be a master page file, and this will be indicated by having the name of the service as part of its file name - i.e. THEATRE. PGE.

The page file, having the extension .PGE, will contain copies of the block function scripts from all of the .TXT files. The block function scripts are those sections of script contained between the (for example) query_block: and endblock delimiters in a text file. The page file thus provides a functional description of the whole service in script language which may be read by a human service designer and also is suitable for direct translation into C++ code.

The form file, having the extension .FRM, will contain copies of the block form scripts from all of the .TXT files. The block form scripts are the sections of script contained between (for example) the query_form: and endform delimiters. The form file provides text data which may be played back to a caller as synthesized speech, as part of an operation of a corresponding part of the page file. It should be noted that not all blocks generate form data.

Thus the page file and the form file together define the operations and the data required to make up a complete page of a service. In the present example the page file and the form file together define the whole service, as only one flow chart page has been used.

The procedure for generating page and form files is detailed in Figure 33. At step 303 a question is asked as to whether another flow chart page needs to be defined. If the answer is no, no further .PGE or .FRM files need be created, and control flow is diverted, to step 57 of Figure 5B (service simulation). If a new page is to be defined, control is diverted to step 304, where the connections between blocks are analyzed to create a logical block order, which loosely represents the hierarchical structure of a C++ program which will eventually be generated from the script contained in the page file.

At step 305 a check is made to see if another building block remains in the list to be copied to the page and form files. If the answer is no, control is returned to step 303. If the answer is yes, control is diverted to step 306. At step 306 the text file containing the specified block is opened so that its contents may be read. At step 306, the text between and including the xxxx_block: and endblock delimiters is copied into the current page file. At step 307 the text between and including the xxxx_form: and endform delimiters is copied into the current form file. Thus a page file and a form file are built up from the text files which were generated during block parameter entry. A page file built up in this way from the current theatre ticket example is shown in Figure 34, and its corresponding form file is shown in Figure 35.

### AUGMENTING BLOCK FUNCTIONS USING STUB CODE

Stub code may be inserted into the system design on the flow chart using a stub block or pre-block and post-block stub appendages. Stub code is code written in C or C++, and is used to augment the range of functionality provided by the pre-programmed function blocks, so that a service designer need not be impeded by the range of preprogrammed function blocks that are provided as part of the service creation tool. When the service is automatically translated from script files into C or C++ instructions, the stub code is inserted into the resulting C or C++ program at the appropriate point.

Thus the service creation tool provides the flexibility of manual programming, while the hard work of translating script into a C or C++ is performed automatically.

The external block 194 shown in Figure 25 may be replaced by a stub block containing lines of C or C++ code.

There are several possible reasons for doing this. It may be possible to replace the external program called by the external block entirely by subroutines written in C or C++. Thus the service will be defined largely as a self consistent whole without reference to other software. This can have advantages of speed, improvement of debugging facilities, and greater flexibility of operations which may be implemented.

Figure 35 shows an example of the same service shown in Figure 25, but having the external block replaced by a stub block 351. Thus the stub block performs an identical function using local C/C++ to that provide previously by the external block, which executes instructions in a completely separate program.

Figure 36A shows the stub block proforma and an example of some C/C+- code which performs the operation of retrieving theatre seat availability from a database. The stub block enables the programmer to define header and library files for inclusion in the overall C or C++ program for the service. Thus specialized libraries of functions previously generated by software developers may be included to provide the necessary subroutines for specialized operations. In the case of this example a database header is selected, which defines access to a library of functions for creating, accessing and manipulating databases. In the stub block example shown, the line #include 〈database.h〉 defines access to a library of routines called database.h and database. lib.

The C/C++ code includes the variable declaration:
theatre *Index;
   which declares the pointer *Index for use as a pointer to variables in a database structured for storing theatre records. The function:
LookupRecord(*THEATRES, "MADISON", CurrentDate, *Index); looks up a record in a database defined by the constant string variable THEATRES, searching for a particular record for the theatre having "MADISON" in its name field, and for information stored in that record against a field containing the same value as the system variable CurrentDate. The information contained in the subset of fields associated with the date is returned by updating the value of *Index, which then points to said information. The operation:
seats = Index. availability;
   assigns the value in the availability element of the Index structure to the seats variable, which is then accessible by other blocks in the service.

The script generated by the stub block example is shown in Figure 36B. This may be compared with the script definition of a stub block detailed in Figure 22B.

An second alternative method for implementing the database operation is to include C/C++ code in the pre-block stub for the info2 block 196, shown again in Figure 37. In Figure 37, the advantage of the pre-stub block becomes clear, as the function of the service is clarified on the flow chart, with the info2 block 196 providing the actual operation of fetching information as well as playing it back to the caller.

In Figure 38A, the info block is shown again. C or C++ code is entered into a pre-stub by activating the prestub button 361. This has the effect of activating a secondary window, which provides an appropriate form for entering C code as text, in a similar manner to that provided by the stub block proforma. C/C++ code similar to that shown in the stub block in Figure 36A, and providing the same function, is shown in place in the script file for the modified info2 block in Figure 38B. Pre-stub C/C+ + code is executed, as its name implies, before block operations. Simple arithmetic operations may be defined for operation on system variables prior to block operations by means of the pre-arith button 363, shown in Figure 38A. Similarly post-arith 362 and post-stub 364 buttons on a block proforma provide means for defining post-block arithmetic functions and post-block C/C+ + code. Any block may thus be provided with up to four sets of additional functional code segments, which may be used to enhance or modify operation of that block. In this way, a pre-defined library of function blocks is given enhanced flexibility.

Clearly, programming in C or C + + within such a context is not within the scope of the inexperienced programmer. However, it should be noted that considerable expertise may be invested in personnel whose skill includes knowledge of both C/C + + programming and service provision. Thus, a system which combines both of these methods of service design in a highly efficient graphics-driven user interface, may have considerable advantage over systems which are designed for the novice only, and which lack the considerable flexibility that C/C + + augmentation can provide.

### CREATION OF DOWN-LOADABLE INSTRUCTIONS

The generation of down-loadable C or C + + instructions is performed automatically by the system of the preferred embodiment. Although the instructions, hereinafter referred to as the program, may be generated automatically, advanced options are available for use by experienced service designers/programmers, so that C/C + + libraries, object code libraries and associated program libraries may be referenced by the C or C + + header files. These options take the form of additional graphic based input means, which override default script parameters in two files called a system global file and a service global file. These files provide information required during the process of translating page files (and their associated form files) into a C or C + + program.

Procedures performed by the system to produce the down-loadable instructions are detailed in Figure 39. At step 701, variables are extracted from the page files and a representation of the service structure is built up. The page files include a system global file and a service global file. The system global file identifies parameters common to the whole service, while the service global file identifies the structure of the service, in terms of the arrangement of pages. The service description is then completely defined by the addition of respective files for each of the pages, defining the blocks within the page and the way in which these are connected.

At step 702, the page files are processed to produce down-loadable instructions, preferably in a form compatible with the C + + programming language. The instructions will include a subroutine for each page in combination with a control program defining a finite number of possible states, i.e., a finite state machine. At step 703, a human readable representation of the down-loadable instructions is produced, allowing an operator to follow progress of the system when in on-line operation.

In order to conform to the requirements of C + +, it is necessary to declare variables at the beginning of a section of C + + instructions (a function) in which they are used. Thus the first step in generating the C + + program is to determine the existence of variables in the script files and to determine their type (integer or string etc.) from the context in which they are used.

The procedure for extracting variables, identified at step 701 in Figure 39, is detailed in Figure 40. At step 712, variables are identified by performing a search for the relevant script keywords such as: "arg", "pre-do" and "do", thereby allowing the type of the variables to be determined from their context. When variables are identified which cannot be typed, a report is made to this effect.

At step 713, further measures are taken to identify the type of the variables, by considering the arguments which are supplied to the page. To facilitate the identification of a type for each variable, "same type as" lists are created, such that all of the variables in a list can be typed, if the type of one of the variables in the list has been determined.

If variables cannot be typed, they are displayed at step 714, whereupon an operator may supply the required information or seek clarification from a service creator.

The procedures identified at step 702, for processing the page files for each page, are detailed in Figure 41. A separate page file exists for each page of the service and this approach is retained in the C+ + code. A main C+ + program is created, which is arranged to call each page subroutine, thereby linking the page files together and defining their order. Thus, at step 721 the next page file is opened and a corresponding C+ + output file is created.

At step 722, comments from the script file are copied as C + + comments until the page name is identified. At step 723, global variables used by the page are copied to the C+ + file. At step 724 the position of the page in the service hierarchy is determined, arguments passed to the page file are copied and local variables are passed to the C+ + file.

At step 725, the page is translated into C+ + until the end of the page legend is identified. Translation initially consists of identifying each block within the page and calling a respective translation subroutine to translate each of the blocks. Once the blocks have been translated, a page function prototype is written to the C + + file at step 726. At step 727, control logic is written, which controls the calling of block subroutines within the page and effectively defines a finite state machine for the page.

At step 728, variables are re-set and at step 729, a question is asked as to whether more pages are present which require processing. If answered in the affirmative, control is returned to step 721 and the next page of text files are processed. Eventually, all of the pages of text files will have been processed and a question asked at step 729 will be answered in the negative. When so answered, control is directed to step 730, whereupon main calling instructions are created, based upon the hierarchy of the pages making up the complete service.

Once completed in this manner, the service is defined by a number of C + + files. The C + + files are readable by a human operator, and documentation may be produced which relates to the detailed coding of these files. The C + + files are then down-loaded to a service provider, who will have the facilities to compile the C + + files into executable code for a particular speech applications platform. Documentation may provide details of various minor alterations which may be required to make the C + + code suitable for compilation within a particular operating system or platform environment. Furthermore, C + + is a popular programming language, and software supplied in this form may be usefully modified to provide additional or alternative functionality by service providers who have the necessary programming skills.

## Claims

1. An apparatus for generating a sequence of instructions for execution by an applications platform, comprising
input means (38,39) for receiving user input
graphical display means (27); and
processing means (31) which is
a) responsive to user input of first data specifying desired ones of a plurality of discrete functions capable of being performed by the applications platform, to display, via said graphical display means, a graphical representation of functional blocks corresponding to the specified functions;
b) responsive to user input of second data specifying desired linkages between the specified functions, which linkages together define a logical sequence of performance of said functions, to display, via said graphical display means, a graphical representation of connections between the blocks corresponding to the specified linkages;
c) operable to test the validity of the logical sequence defined by said linkages, to recognise errors in said logical sequence; and characterised in that the processing means is further operable only in the event of no such errors being recognised, to receive user input of third data specifying, for one or more of the specified functions, parameters particularising the function which is to be performed and to generate a sequence of instructions for execution of the specified functions in the defined sequence in response to the parameters thereby specified.

2. An apparatus according to claim 1 in which the processing means is arranged to
generate a text file for each of said blocks;
generate a script file from said text files; and
generate the sequence of instructions from said script file.

3. An apparatus according to claim 2 in which the processing means is further arranged to simulate the operation of the applications platform when executing the generated instructions by interpreting said script file.

4. An apparatus according to any one of the preceding claims in which said errors in the logical sequence include missing linkages between functional blocks.

5. An apparatus according to any one of the preceding claims in which said errors in the logical sequence include duplicated linkages between functional blocks.

6. An apparatus according to any one of the preceding claims in which said errors in the logical sequence include functional blocks having no input linkage.

7. An apparatus according to any one of the preceding claims in which said applications platform is a speech applications platform, and said instructions are represented in the form of a high level language.

8. A method of generating a sequence of instructions for execution by an applications platform, comprising steps of
receiving (75) first data specifying desired ones of a plurality of discrete functions capable of being performed by the applications platform;
displaying (76) a graphical representation of functional blocks corresponding to the specified functions;
receiving (78,79) second data specifying desired linkages between the specified functions, which linkages together define a logical sequence of performance of said functions;
displaying (80) a graphical representation of connections between the blocks corresponding to the specified linkages;
testing (53) the validity of the logical sequence defined by said linkages, to recognise errors in said logical sequence; and characterised in that
only in the event of no such errors being recognised, in response to said first data and said second data, receiving (55) further user data specifying, for one or more of the specified functions, parameters particularising the function which is to be performed and generating (61) a sequence of instructions for execution of the specified functions in the defined sequence in accordance with the parameters thereby specified.

9. A method according to claim 8 in which the sequence of instructions is generated by steps of
generating (56) a text file for each of said blocks;
generating (303 - 308) a script file from said text files; and
generating (702) the sequence of instructions from said script file.

10. A method according to claim 9 in which the operation of the applications platform when executing the generated instructions is simulated by interpreting said script file.

11. A method according to any one of claims 8 to 10 in which said errors in the logical sequence include missing linkages between functional blocks.

12. A method according to any one of claims 8 to 11 in which said errors in the logical sequence include duplicated linkages between functional blocks.

13. A method according to any one of claims 8 to 12 in which said errors in the logical sequence include functional blocks having no input linkage.

14. A method according to any one of claims 8 to 13 in which said applications platform is a speech applications platform, and said instructions are represented in the form of a high level language.

## Patentansprüche

1. Vorrichtung zum Erzeugen einer Befehlssequenz, die durch eine Anwendungsplattform ausgeführt werden soll, mit
einer Eingabeeinrichtung (38, 39) zum Empfangen einer Anwendereingabe;
einer graphischen Anzeigeeinrichtung (27); und
einer Verarbeitungseinrichtung (31), die
a) als Antwort auf eine Anwendereingabe erster Daten, die gewünschte Funktionen mehrerer diskreter Funktionen spezifizieren, die durch die Anwendungsplattform ausgeführt werden können, mittels der graphischen Anzeigeeinrichtung eine graphische Darstellung der funktionalen Blöcke, die den spezifizierten Funktionen entsprechen, anzeigt;
b) als Antwort auf eine Anwendereingabe zweiter Daten, die gewünschte Verknüpfungen zwischen den spezifizierten Funktionen spezifizieren, wobei die Verknüpfungen gemeinsam eine logische Sequenz zur Ausführung der Funktionen definieren, mittels der graphischen Anzeigeeinrichtung eine graphische Darstellung von Verbindungen zwischen den den spezifizierten Verknüpfungen entsprechenden Blöcken anzeigt;
c) so betreibbar ist, daß sie die Gültigkeit der logischen Sequenz, die durch die Verknüpfungen definiert ist, prüft, um Fehler in der logischen Sequenz zu erkennen; und dadurch gekennzeichnet, daß
die Verarbeitungseinrichtung ferner nur dann, wenn keine solchen Fehler erkannt werden, so betreibbar ist, daß sie eine Anwendereingabe dritter Daten empfängt, die für eine oder mehrere der spezifizierten Funktionen Parameter spezifizieren, die die Funktion, die ausgeführt werden soll, partikularisieren, und so, daß als Antwort auf die hiermit spezifizierten Parameter eine Befehissequenz für die Ausführung der spezifizierten Funktionen in der definierten Sequenz erzeugt wird.

2. Vorrichtung nach Anspruch 1, in der die Verarbeitungseinrichtung so beschaffen ist, daß sie
für jeden der Blöcke eine Textdatei erzeugt;
aus den Textdateien eine Skriptdatei erzeugt; und
aus der Skriptdatei die Befehlssequenz erzeugt.

3. Vorrichtung nach Anspruch 2, in der die Verarbeitungseinrichtung ferner so beschaffen ist, daß sie die Operation der Anwendungsplattform simuliert, wenn sie die erzeugten Befehle ausführt, indem sie die Skriptdatei interpretiert.

4. Vorrichtung nach einem der vorhergehenden Ansprüche, in der die Fehler in der logischen Sequenz fehlende Verknüpfungen zwischen funktionalen Blöcken umfassen.

5. Vorrichtung nach einem der vorhergehenden Ansprüche, in der die Fehler in der logischen Sequenz doppelte Verknüpfungen zwischen funktionalen Blöcken umfassen.

6. Vorrichtung nach einem der vorhergehenden Ansprüche, in der die Fehler in der logischen Sequenz funktionale Blöcke ohne Eingangsverknüpfung umfassen.

7. Vorrichtung nach einem der vorhergehenden Ansprüche, in der die Anwendungsplattform eine Sprachanwendungsplattform ist und die Befehle in Form einer höheren Programmiersprache dargestellt werden.

8. Verfahren zum Erzeugen einer Befehlssequenz, die durch eine Anwendungsplattform ausgeführt werden soll, mit den folgenden Schritten:
Empfangen (75) erster Daten, die gewünschte Funktionen mehrerer diskreter Funktionen spezifizieren, die durch die Anwendungsplattform ausgeführt werden können;
Anzeigen (76) einer graphischen Darstellung funktionaler Blöcke, die den spezifizierten Funktionen entsprechen;
Empfangen (78, 79) zweiter Daten, die gewünschte Verknüpfungen zwischen den spezifizierten Funktionen spezifizieren, wobei die Verknüpfungen gemeinsam eine logische Sequenz der Ausführung der Funktionen definieren;
Anzeigen (80) einer graphischen Darstellung von Verbindungen zwischen den Blöcken, die den spezifizierten Verknüpfungen entsprechen;
Prüfen (53) der Gültigkeit der durch die Verknüpfungen definierten logischen Sequenz, um Fehler in der logischen Sequenz zu erkennen; und dadurch gekennzeichnet, daß
nur dann, wenn keine solchen Fehler erkannt werden, als Antwort auf die ersten Daten und die zweiten Daten ferner Anwenderdaten empfangen (55) werden, die für eine oder mehrere der spezifizierten Funktionen Parameter spezifizieren, die die Funktion, die ausgeführt werden soll, partikularisieren, und eine Befehlssequenz für die Ausführung der spezifizierten Funktionen in der definierten Sequenz in Übereinstimmung mit den hiermit spezifizierten Parametern erzeugt (61) wird.

9. Verfahren nach Anspruch 8, bei dem die Befehissequenz erzeugt wird durch die folgenden Schritte:
Erzeugen (56) einer Textdatei für jeden der Blöcke;
Erzeugen (303-308) einer Skriptdatei aus den Textdateien; und
Erzeugen (702) der Befehlssequenz aus der Skriptdatei.

10. Verfahren nach Anspruch 9, bei dem die Operation der Anwendungsplattform bei der Ausführung der erzeugten Befehle durch Interpretieren der Skriptdatei simuliert wird.

11. Verfahren nach einem der Ansprüche 8 bis 10, bei dem die Fehler in der logischen Sequenz fehlende Verknüpfungen zwischen den funktionalen Blöcken umfassen.

12. Verfahren nach einem der Ansprüche 8 bis 11, bei dem die Fehler in der logischen Sequenz doppelte Verknüpfungen zwischen funktionalen Blöcken umfassen.

13. Verfahren nach einem der Ansprüche 8 bis 12, bei dem die Fehler in der logischen Sequenz funktionale Blöcke ohne Eingangsverknüpfung umfassen.

14. Verfahren nach einem der Ansprüche 8 bis 13, bei dem die Anwendungsplattform eine Sprachanwendungsplattform ist und die Befehle in Form einer höheren Programmiersprache dargestellt werden.

## Revendications

1. Dispositif destiné à générer une séquence d'instructions en vue d'une exécution par une plate-forme d'applications, comprenant
des moyens de saisie (38, 39) destinés à recevoir une saisie d'un utilisateur,
un moyen de d'affichage graphique (27), et
un moyen de traitement (31) qui est
a) sensible à une saisie par un utilisateur de premières données spécifiant des fonctions souhaitées parmi un certain nombre de fonctions discrètes pouvant être exécutées par la plate-forme d'applications, afin d'afficher par l'intermédiaire dudit moyen d'affichage graphique, une représentation graphique des blocs fonctionnels correspondant aux fonctions spécifiées,
b) sensible à une saisie par un utilisateur de secondes données spécifiant des chaînages souhaités entre les fonctions spécifiées, lesquels chaînages définissent ensemble une séquence logique d'exécution desdites fonctions, afin d'afficher, par l'intermédiaire dudit moyen d'affichage graphique, une représentation graphique des liaisons entre les blocs correspondant aux chaînages spécifiés,
c) utilisable pour tester la validité de la séquence logique définie par lesdits chaînages, pour identifier des erreurs dans ladite séquence logique, et caractérisé en ce que le moyen de traitement est en outre utilisable uniquement dans le cas où aucune telle erreur n'est identifiée, pour recevoir une saisie par un utilisateur de troisièmes données spécifiant, pour une ou plusieurs des fonctions spécifiées, des paramètres particularisant la fonction qui doit être exécutée et pour générer une séquence d'instructions en vue d'une exécution des fonctions spécifiées suivant la séquence définie en réponse aux paramètres ainsi spécifiés.

2. Dispositif selon la revendication 1, dans lequel le moyen de traitement est agencé pour
générer un fichier texte pour chacun desdits blocs,
générer un fichier de script à partir desdits fichiers texte, et
générer la séquence d'instructions à partir dudit fichier de script.

3. Dispositif selon la revendication 2, dans lequel le moyen de traitement est en outre agencé pour simuler le fonctionnement de la plate-forme d'applications lors de l'exécution des instructions générées par l'interprétation dudit fichier de script.

4. Dispositif selon l'une quelconque des revendications précédentes, dans lequel lesdites erreurs dans la séquence logique comprennent des chaînages manquants entre des blocs fonctionnels.

5. Dispositif selon l'une quelconque des revendications précédentes, dans lequel lesdites erreurs dans la séquence logique comprennent les chaînages dupliqués entre des blocs fonctionnels.

6. Dispositif selon l'une quelconque des revendications précédentes, dans lequel lesdites erreurs dans la séquence logique comprennent des blocs fonctionnels ne comportant aucun chaînage en entrée.

7. Dispositif selon l'une quelconque des revendications précédentes, dans lequel ladite plate-forme d'applications est une plate-forme d'applications vocale, et lesdites instructions sont représentées sous forme d'un langage de haut niveau.

8. Procédé de génération d'une séquence d'instructions en vue d'une exécution par une plate-forme d'applications, comprenant les étapes consistant à
recevoir (75) des premières données spécifiant des fonctions souhaitées d'un certain nombre de fonctions discrètes pouvant être exécutées par la plate-forme d'applications,
afficher (76) une représentation graphique des blocs fonctionnels correspondant aux fonctions spécifiées,
recevoir (78, 79) des secondes données spécifiant des chaînages souhaités entre les fonctions spécifiées, lesquels chaînages définissent ensemble une séquence logique d'exécution desdites fonctions,
afficher (80) une représentation graphique des liaisons entre les blocs correspondant aux chaînages spécifiés,
tester (53) la validité de la séquence logique définie par lesdits chaînages, afin d'identifier des erreurs dans ladite séquence logique, et caractérisée en ce que,
uniquement dans le cas où aucune telle erreur n'est identifiée, en réponse auxdites premières données et auxdites secondes données, recevoir (55) d'autres données d'un utilisateur spécifiant, pour une ou plusieurs des fonctions spécifiées, des paramètres particularisant la fonction qui doit être exécutée, et générer (61) une séquence d'instructions en vue d'une exécution des fonctions spécifiées dans la séquence définie conformément aux paramètres ainsi spécifiés.

9. Procédé selon la revendication 8, dans lequel la séquence d'instructions est générée par les étapes consistant à
générer (56) un fichier texte pour chacun desdits blocs,
générer (303 à 308) un fichier de script à partir desdits fichiers texte, et
générer (702) la séquence d'instructions à partir dudit fichier de script.

10. Procédé selon la revendication 9, dans lequel le fonctionnement de la plate-forme d'applications est simulé, lors de l'exécution des instructions générées, par l'interprétation dudit fichier de script.

11. Procédé selon l'une quelconque des revendications 8 à 10, dans lequel lesdites erreurs dans la séquence logique comprennent des chaînages manquants entre des blocs fonctionnels.

12. Procédé selon l'une quelconque des revendications 8 à 11, dans lequel lesdites erreurs dans la séquence logique comprennent des chaînages dupliqués entre des blocs fonctionnels.

13. Procédé selon l'une quelconque des revendications 8 à 12, dans lequel lesdites erreurs dans la séquence logique comprennent des blocs fonctionnels ne comportant aucun chaînage en entrée.

14. Procédé selon l'une quelconque des revendications 8 à 13, dans lequel ladite plate-forme d'applications est une plate-forme d'applications vocales, et lesdites instructions sont représentées sous forme d'un langage de haut niveau.
